# EUROPÄISCHE PATENTSCHRIFT

(11) **EP 3 010 989 B1**
(45) Veröffentlichungstag und Bekanntmachung des Hinweises auf die Patenterteilung: **20.01.2021**
(21) Anmeldenummer: 14728943.3
(22) Anmeldetag: 05.06.2014
(51) Int. Cl.: C09J 5/04, C09J 7/10, C09J 4/06, C09J 133/06, C08L 75/04

(54) **REAKTIVES 2-KOMPONENTENKLEBESYSTEM IN FILMFORM**
REACTIVE 2-COMPONENT ADHESIVE FILM SYSTEM
SYSTÈME ADHÉSIF BI-COMPOSANT RÉACTIF SOUS FORME DE FILM

(30) Priorität: 17.06.2013 DE 102013211319; 08.11.2013 DE 102013222739
(43) Veröffentlichungstag der Anmeldung: 27.04.2016
(73) Patentinhaber: tesa SE, 22848 Norderstedt (DE)
(72) Erfinder: SCHÜMANN, Uwe, 25421 Pinneberg (DE); SCHMITZ-STAPELA, Daniel, 22529 Hamburg (DE); REITER, Sven, 22850 Norderstedt (DE); DOLLASE, Thilo, 22397 Hamburg (DE)
(74) Vertreter: tesa SE
(86) Internationale Anmeldenummer: PCT/EP2014/061748
(87) Internationale Veröffentlichungsnummer: WO 2014/202402

(56) Entgegenhaltungen:
- EP-A1- 0 300 847

## Beschreibung

### Technisches Gebiet der Erfindung

Die vorliegende Erfindung betrifft ein reaktives Klebstofffilm-System gemäß Anspruch 1 zur Verklebung von diversen Materialien, wie z.B. Metall, Holz, Glas und/oder Kunststoff. Dieses 2-Komponentenklebesystem umfasst zwei reaktive Klebstofffilme, die jeweils (a) eine polymere Filmbildner-Matrix und (b) mindestens ein reaktives Monomer umfassen, wobei der erste Klebstofffilm zusätzlich mindestens einen Radikalinitiator enthält und der zweite Klebstofffilm zusätzlich mindestens einen Aktivator enthält. Außerdem wird ein Verfahren zur Herstellung der erfindungsgemäßen reaktiven Klebstofffilme, wie oben beschrieben, und ein Kit zur Bereitstellung des erfindungsgemäßen, reaktiven Klebstofffilm-Systems, umfassend einen ersten und einen zweiten reaktiven Klebstofffilm, wie oben beschrieben, zur Verfügung gestellt.

### Allgemeiner Stand der Technik

2-Komponentenklebesysteme sind allgemein seit Jahren bekannt und in der Fachliteratur eingehend beschrieben. In diesen Systemen wird ein aus zwei Komponenten bestehendes Klebstoff-System auf die zu verklebenden Teile aufgetragen, wobei üblicherweise zwei flüssige Komponenten zum Einsatz kommen. Beispielsweise besteht bei chemisch reagierenden 2-Komponenten-Polymerisationsklebesystemen die eine Komponente aus dem zu polymerisierenden Monomer und einem Aktivator und die andere Komponente aus einer radikalbildenden Substanz (auch Härter oder Initiator genannt)und dem zu polymerisierenden Monomer. Nach Durchmischen oder zumindest Kontaktieren der beiden Komponenten und einer Aktivierung, die meist thermisch erfolgt, wird die radikalbildende Substanz durch den Aktivator in zwei Radikale aufgespalten und die Polymerisationsreaktion der zu polymerisierenden Monomere beginnt. Die Radikalkettenpolymerisation des Monomers findet anschließend bis zu einem Kettenabbruch statt und die Klebemasse härtet aus, wodurch eine dauerhafte Verklebung der zu verklebenden Teile erreicht wird.

Nachteil derartiger flüssiger 2-Komponenten-Polymerisations-Klebesysteme ist, dass ihre Anwendung oft unsauber erfolgt, da die beiden Komponenten meist flüssig bis pastös auf die zu verklebenden Teile aufgetragen werden müssen. Dies ist vor allem bei großflächigen Verklebungen und/oder bei solchen Anwendungen problematisch, bei denen die Oberflächen uneben, z.B. geneigt, sind. Außerdem erfolgt die Aktivierung des Klebstoffsystems in der Regel bei erhöhten Temperaturen, was für empfindliche Substrate, wie z.B. eloxiertes Aluminium, problematisch sein kann. Ein weiterer Nachteil derartiger Systeme ist, dass die Lagerstabilität der beiden Komponenten kritisch sein kann. Darüber hinaus gehen herkömmliche 2-Komponenten-Polymerisations-Klebesysteme nach vollständigem Aushärten häufig mit Problemen einher, die erst bei Erschütterungen sichtbar werden. So kann es bei den Systemen des Standes der Technik im Bereich der Verklebungen durch starke Erschütterungen zu Rissen oder Brüchen kommen.

Die EP 300 847 A betrifft einen reaktiven Klebstofffilm, umfassend (a) eine polymere Filmbildner-Matrix, (b) mindestens ein reaktives Monomer oder Reaktivharz und (c) ein Reagens, ausgewählt aus einem Initiator, insbesondere Radikalinitiator, oder einem Aktivator, und ein reaktives 2-Komponentenklebesystem in Filmform zur Verklebung von diversen Materialien, wie z.B. Metall, Holz, Glas und/oder Kunststoff, umfassend zwei solche Filme, wobei einer den Initiator und einer den Aktivator aufweist. Thermoplastisches Polyurethan als Matrixpolymer wird nicht erwähnt. Weiterhin beschreibt die D1 nicht, dass beide Filme des 2-Komponentenklebesystems reaktive Monomere beziehungsweise Reaktivharze aufweisen.

### Aufgabe der vorliegenden Erfindung

Der vorliegenden Erfindung liegt insofern die Aufgabe zu Grunde, ein verbessertes, reaktives 2-Komponentenklebesystem bereitzustellen. Vor diesem Hintergrund schlägt die vorliegende Erfindung ein reaktives 2-Komponentenklebesystem in Filmform zur Verklebung von diversen Materialien vor, um die oben beschriebenen Probleme der bekannten, flüssigen 2-Komponentenklebesysteme zu umgehen.

Insbesondere wird ein reaktives 2-Komponentenklebesystem in Filmform bereitgestellt, das einfach zu handhaben ist und idealerweise bereits eine Haftklebrigkeit aufweist, so dass es zu keinem Verrutschen bei der Applikation auf die zu verklebenden Substrate kommt und eine exaktere Verklebung als bei den flüssigen 2-Komponenten-Polymerisationsklebesystemen, die im Stand der Technik bekannt sind, ermöglicht wird.

### Zusammenfassung der Erfindung

Die vorliegende Erfindung betrifft ein reaktives Klebstofffilm-System, umfassend zwei reaktive Klebstofffilme, wobei der erster Klebstofffilm (a) eine polymere Filmbildner-Matrix, (b) mindestens ein reaktives Monomer oder Reaktivharz und (c) mindestens einen Initiator, insbesondere Radikalinitiator umfasst und der zweite Klebstofffilm (a) eine polymere Filmbildner-Matrix, (b) mindestens ein reaktives Monomer oder Reaktivharz und (c) mindestens einen Aktivator umfasst, wobei die polymere Filmbildner-Matrix (a) beider Klebstofffilme thermoplastisches Polyurethan ist.

Dieses reaktive Klebstofffilm-System ist als 2-Komponenten-Polymerisationsklebesystem in Filmform zur verbesserten Verklebung von diversen Materialien geeignet.

### Detaillierte Beschreibung der Erfindung

Erfindungsgemäß wird die oben beschriebene Aufgabe über ein reaktives Klebstofffilm-System gelöst, das zwei reaktive Klebstofffilme umfasst. Dieses Klebstofffilm-System ist dadurch gekennzeichnet, dass der erste reaktive Klebstofffilm eine polymere Filmbildner-Matrix (a), mindestens ein reaktives Monomer oder Reaktivharz (b) sowie einen Initiator, insbesondere Radikalinitiator (c) enthält und der zweite reaktive Klebstofffilm eine polymere Filmbildner-Matrix (a), mindestens ein reaktives Monomer oder Reaktivharz (b) sowie einen Aktivator (c) enthält, wobei die polymere Filmbildner-Matrix (a) beider Klebstofffilme thermoplastisches Polyurethan ist.

In einer weiteren erfindungsgemäßen Ausführungsform wird ein Verfahren zur Herstellung eines erfindungsgemäßen, reaktiven Klebstofffilm-Systems offenbart, wobei die Klebstofffilme mittels eines Verfahrens hergestellt werden, das die folgenden Schritte umfasst:
1. Auflösen und/oder Feinverteilen der Inhaltsstoffe in einem oder mehreren Lösemittel(n) und/oder Wasser,
2. Mischen der aufgelösten oder feinverteilten Inhaltsstoffe,
3. Beschichten eines Trennliners oder -papiers, eines Trägermaterials oder eines Haftklebstoffs mit der Mischung aufgelöster oder verteilter Inhaltsstoffe nach Schritt 2,
4. Verdunsten des Lösemittels und/oder Wassers und
5. Gegebenenfalls Aufwickeln des reaktiven Klebstofffilms zu einer Rolle.
wobei die Inhaltsstoffe (a) eine polymere Filmbildner-Matrix, (b) mindestens ein reaktives Monomer oder Reaktivharz und (c) ein Reagens, ausgewählt aus einem Initiator, insbesondere Radikalinitiator, oder einem Aktivator, umfassen.

Schritte 1. und 2. können auch in einem Schritt erfolgen, die Inhaltsstoffe also gleichzeitig aufgelöst und/oder feinverteilt werden.

In einer weiteren Ausführungsform wird ein Verfahren zur Herstellung eines erfindungsgemäßen, reaktiven Klebstoffilm-Systems offenbart, wobei das Verfahren zur Herstellung der Klebstofffilme lösungsmittel- und wasserfrei ist. Entsprechend werden Formulierungen für erfindungsgemäße, reaktive Klebstofffilme durch Einwirkung von Wärme und/oder Scherung z. B. in einem Hotmeltkneter oder Compoundierextruder hergestellt.

In einer anderen erfindungsgemäßen Ausführungsform wird ein Kit zur Bereitstellung eines Zweikomponenten-Klebstofffilm-Systems, umfassend (i) mindestens einen ersten reaktiven Klebstofffilm, der einen Initiator, insbesondere Radikalinitiator enthält, und (ii) mindestens einen zweiten reaktiven Klebstofffilm, der einen Aktivator enthält, offenbart.

In einer weiteren erfindungsgemäßen Ausführungsform wird ein Verbundkörper offenbart, der durch das erfindungsgemäße, reaktive Klebstofffilm-System oder durch das erfindungsgemäße Kit verbunden ist.

Nachfolgend werden die Komponenten der erfindungsgemäßen Klebstofffilme bzw. des erfindungsgemäßen Klebstofffilm-Systems im Detail beschrieben.

### Polymere Filmbildner-Matrix

Die erfindungsgemäßen Klebstofffilme bestehen grundsätzlich aus einer Matrix, die nachfolgend polymere Filmbildner-Matrix genannt wird, in der die reaktiven, zu polymerisierenden Monomere und/oder Reaktivharze enthalten sind. Aufgabe dieser

Matrix ist ein inertes Grundgerüst für die reaktiven Monomere und/oder Klebharze zu bilden, so dass diese nicht - wie im Stand der Technik - flüssig vorliegen und damit die genannten Probleme auslösen können, sondern in einem Film oder einer Folie eingelagert sind. Auf diese Art und Weise wird eine einfachere Handhabung gewährleistet.

Inert bedeutet in diesem Zusammenhang, dass die reaktiven Monomere und/oder Reaktivharze unter geeignet gewählten Bedingungen (z. B. bei ausreichend geringen Temperaturen) im Wesentlichen nicht mit der polymeren Filmbildner-Matrix reagieren.

Erfindungsgemäß wird ein thermoplastisches Polyurethan eingesetzt. Vorzugsweise besitzt das thermoplastische Polyurethan eine Erweichungstemperatur von kleiner als 100°C, insbesondere kleiner als 80°C. In diesem Zusammenhang steht der Begriff Erweichungspunkt für die Temperatur, ab der das thermoplastische Granulat mit sich selbst verklebt.

In einer besonders bevorzugten, erfindungsgemäßen Ausführungsform wird Desmomelt 530® als polymere Filmbildner-Matrix eingesetzt, das im Handel bei der Bayer Material Science AG, 51358 Leverkusen, Deutschland, erhältlich ist. Desmomelt 530® ist ein hydroxyl-terminiertes, weitgehend lineares, thermoplastisches, stark kristallisierendes Polyurethan-Elastomer.

Die Menge der polymeren Filmbildner-Matrix liegt erfindungsgemäß im Bereich von etwa 20-80 Gew.%, bevorzugt etwa 30-50 Gew.%, bezogen auf die Gesamtmischung der Bestandteile des reaktiven Klebstofffilms. Am stärksten bevorzugt werden 35-45 Gew.%, bevorzugt etwa 40 Gew.% der polymeren Filmbildner-Matrix, bezogen auf die Gesamtmischung der Bestandteile des reaktiven Klebstofffilms, eingesetzt. Die Gesamtmischung der Bestandteile des reaktiven Klebstofffilms steht hier für die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.%) erhalten wird.

### Reaktives Monomer oder Reaktivharz

Wie hierin verwendet, soll das reaktive Monomer oder Reaktivharz für ein Monomer oder Harz stehen, das insbesondere zu einer Radikalkettenpolymerisation in der Lage ist.

Erfindungsgemäß ist ein geeignetes, reaktives Monomer ausgewählt aus der Gruppe bestehend aus Acrylsäure, Acrylsäureester, Methacrylsäure, Methacrylsäureester, Vinylverbindungen und/oder oligomere bzw. polymere Verbindungen mit Kohlenstoff-Kohlenstoff-Doppelbindungen.

In einer bevorzugten Ausführungsform ist das reaktive Monomer ein oder mehrere Vertreter ausgewählt aus der Gruppe, bestehend aus: Methylmethacrylat (CAS-Nr. 80-62-6), Methacrylsäure (CAS-Nr. 79-41-4), Cyclohexylmethacrylat (CAS-Nr. 101-43-9), Tetrahydrofurfuryl-methacrylat (CAS-Nr. 2455-24-5), 2-Phenoxyethylmethacrylat (CAS-Nr. 10595-06-9), Di-(ethylenglykol)methylethermethacrylat (CAS-Nr. 45103-58-0) und/oder Ethylenglykoldimethacrylat (CAS-Nr. 97-90-5).

In einer weiteren bevorzugten, erfindungsgemäßen Ausführungsform enthält der reaktive Klebstofffilm eine Mischung von Cyclohexylmethacrylat, Tetrahydrofurfurylmethacrylat, Methacrylsäure und Ethylenglykoldimethacrylat als zu polymerisierende, reaktive Monomere.

In einer weiteren bevorzugten, erfindungsgemäßen Ausführungsform enthält der reaktive Klebstofffilm eine Mischung von Methylmethacrylat, Methacrylsäure und Ethylenglykoldimethacrylat als zu polymerisierende, reaktive Monomere.

In einer weiteren bevorzugten, erfindungsgemäßen Ausführungsform enthält der reaktive Klebstofffilm eine Mischung von 2-Phenoxyethylmethacrylat und Ethylenglykoldimethacrylat als zu polymerisierende, reaktive Monomere.

In einer weiteren bevorzugten, erfindungsgemäßen Ausführungsform enthält der reaktive Klebstofffilm eine Mischung von Di-(ethylenglykol)methylethermethacrylat und Ethylenglykoldimethacrylat als zu polymerisierende, reaktive Monomere.

Als Reaktivharz(e) können oligomere mono-, di-, tri- und höher funktionalisierte (Meth)acrylate ausgewählt werden. Sehr vorteilhaft werden diese im Gemisch mit zumindest einem reaktiven Monomer eingesetzt.

Jede dieser bevorzugten Ausführungsformen kann erfindungsgemäß mit einem thermoplastischen Polyurethan, wie z.B. Desmomelt 530®, als polymere Filmbildner-Matrix kombiniert werden.

Die Menge des reaktiven Monomers/der reaktiven Monomere/des Reaktivharzes/der Reaktivharze liegt erfindungsgemäß im Bereich von etwa 20-80 Gew.%, bevorzugt etwa 40-60 Gew.%, bezogen auf die Gesamtmischung der Bestandteile des reaktiven Klebstofffilms. Am stärksten bevorzugt werden etwa 40-50 Gew.% des reaktiven Monomers/der reaktiven Monomere/des Reaktivharzes/der Reaktivharze, bezogen auf die Gesamtmischung der Bestandteile des reaktiven Klebstofffilms, eingesetzt. Die Gesamtmischung der Bestandteile des reaktiven Klebstofffilms steht hierfür die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.%) erhalten wird.

### Initiator, insbesondere Radikalinitiator

Wie hierin verwendet, steht der Begriff Initiator, insbesondere Radikalinitiator bzw. radikalbildende Substanz (oder auch Härter) für eine Verbindung, die eine Polymerisationsreaktion oder Vernetzung des Klebstoffs einleiten kann. Der Initiator, insbesondere Radikalinitiator nimmt allerdings zu einem sehr geringen Anteil am Reaktionsgeschehen teil und bildet folglich keinen die Eigenschaften der Verklebung bestimmenden Polymeranteil.

In der vorliegenden Erfindung wird dem mindestens einen ersten, reaktiven Klebstofffilm des Klebstofffilm-Systems ein Initiator, insbesondere Radikalinitiator zugesetzt.

Bevorzugt werden Radikalinitiatoren. Es können alle im Stand der Technik bekannten Radikalinitiatoren eingesetzt werden. Bevorzugte Radikalinitiatoren sind Peroxide, Hydroperoxide und Azoverbindungen.

In einer besonders bevorzugten, erfindungsgemäßen Ausführungsform ist der Radikalinitiator ein organisches Peroxid. Besonders bevorzugt ist Dimethylbenzylhydroperoxid, das auch als Cumolhydroperoxid (CAS-Nr. 80-15-9) bekannt ist.

Die Menge des Radikalinitiators liegt erfindungsgemäß im Bereich von etwa 3-30 Gew.%, bevorzugt etwa 8-15 Gew.%, bezogen auf die Gesamtmischung der Bestandteile des reaktiven Klebstofffilms. Am stärksten bevorzugt werden etwa 9-11 Gew.% Radikalinitiator, bezogen auf die Gesamtmischung der Bestandteile des reaktiven Klebstofffilms, eingesetzt. Die Gesamtmischung der Bestandteile des reaktiven Klebstofffilms steht hier für die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.%) erhalten wird.

### Aktivator

Wie hier verwendet, steht der Begriff Aktivator für eine Verbindung, die bereits bei sehr geringen Konzentrationen den Ablauf der Polymerisation erst ermöglicht oder beschleunigt. Aktivatoren können auch Beschleuniger oder Akzeleratoren genannt werden.

In der vorliegenden Erfindung wird dem mindestens einen zweiten, reaktiven Klebstofffilm des Klebstofffilm-Systems ein Aktivator zugesetzt.

Geeignete Aktivatoren zur Verwendung in der vorliegenden Erfindung, wenn ein radikalisch polymerisierbares System aktiviert werden soll, sind beispielsweise ausgewählt aus der Gruppe, bestehend aus: einem Amin, einem Dihydropyridin-Derivat, einem Übergangsmetallsalz oder einem Übergangsmetallkomplex.
Insbesondere werden tertiäre Amine zur Aktivierung der radikalbildenden Substanz eingesetzt.

In einer besonders bevorzugten, erfindungsgemäßen Ausführungsform ist der Aktivator 3,5-Diethyl-1,2-dihydro-1-phenyl-2-propylpyridin (auch PDHP genannt, CAS-Nr. 34562-31-7).

Die Menge des Aktivators liegt erfindungsgemäß im Bereich von größer 0 bis etwa 40 Gew.%, bevorzugt etwa 15-25 Gew.%, bezogen auf die Gesamtmischung der Bestandteile des reaktiven Klebstofffilms. Am stärksten bevorzugt werden etwa 16-22 Gew.%, noch bevorzugter 18-20 Gew.% Aktivator, bezogen auf die Gesamtmischung der Bestandteile des reaktiven Klebstofffilms, eingesetzt. Die Gesamtmischung der Bestandteile des reaktiven Klebstofffilms steht hier für die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.%) erhalten wird.

### Vernetzer

Wie hier verwendet, steht der Begriff Vernetzer für chemische Verbindungen, die imstande sind, lineare Molekülketten mit reaktionsfähigen, funktionellen Gruppen zu versehen, damit sich aus den zweidimensionalen Strukturen über Ausbildung intermolekularer Brücken dreidimensional-vernetzte Strukturen bilden können.

Typische Beispiele für Vernetzer sind chemische Verbindungen, die innerhalb des Moleküls oder an den beiden Molekülenden zwei oder mehr gleiche oder unterschiedliche funktionelle Gruppen aufweisen und folglich Moleküle gleicher oder auch unterschiedlicher Strukturen miteinander vernetzen können. Außerdem kann ein Vernetzer mit dem reaktiven Monomer oder Reaktivharz, wie oben definiert, reagieren, ohne dass es dabei zu einer Polymerisation im eigentlichen Sinne kommt. Denn im Gegensatz zum Aktivator, wie oben beschrieben, kann ein Vernetzer in das Polymer-Netzwerk eingebaut werden.

In einer besonders bevorzugten, erfindungsgemäßen Ausführungsform wird Ethylenglykoldimethacrylat (CAS-Nr. 97-90-5) als Vernetzer und/oder reaktives Monomer eingesetzt (siehe oben).

### Weitere Bestandteile des reaktiven Klebstofffilms

Die reaktiven Klebstofffilme der vorliegenden Erfindung können gegebenenfalls weitere Additive und/oder Hilfsstoffe enthalten, die im Stand der Technik bekannt sind. Hier sind beispielsweise Füllstoffe, Farbstoffe, Keimbildner, rheologische Additive, Blähmittel, klebverstärkende Additive (Haftvermittler, Tackifier-Harze), Compoundierungsmittel,

Weichmacher und/oder Alterungs-, Licht- und UV-Schutzmittel, zum Beispiel in Form von primären und sekundären Antioxidantien zu nennen.

### Reaktiver Klebstofffilm

In einer bevorzugten, erfindungsgemäßen Ausführungsform umfasst der mindestens eine erste Klebstofffilm (A) eine Mischung der folgenden Bestandteile: thermoplastisches Polyurethan, insbesondere Desmomelt 530®, Cyclohexylmethacrylat, Tetrahydrofurfurylmethacrylat, Methacrylsäure, Ethylenglykoldimethacrylat und Cumolhydroperoxid.

In einer weiteren bevorzugten, erfindungsgemäßen Ausführungsform umfasst der mindestens eine erste Klebstofffilm (A) eine Mischung der folgenden Bestandteile: thermoplastisches Polyurethan, insbesondere Desmomelt 530®, Methylmethacrylat, Methacrylsäure, Ethylenglykoldimethacrylat und Cumolhydroperoxid.

In einer weiteren bevorzugten, erfindungsgemäßen Ausführungsform umfasst der mindestens eine erste Klebstofffilm (A) eine Mischung der folgenden Bestandteile: thermoplastisches Polyurethan, insbesondere Desmomelt 530®, 2-Phenoxyethylmethacrylat, Ethylenglykoldimethacrylat und Cumolhydroperoxid.

In einer weiteren bevorzugten, erfindungsgemäßen Ausführungsform umfasst der mindestens eine erste Klebstofffilm (A) eine Mischung der folgenden Bestandteile: thermoplastisches Polyurethan, insbesondere Desmomelt 530®, Di-(ethylenglykol)methylethermethacrylat, Ethylenglykoldimethacrylat und Cumolhydroperoxid.

Jede dieser bevorzugten, erfindungsgemäßen Ausführungsformen enthält etwa 20-80 Gew. % thermoplastisches Polyurethan, etwa 20-80 Gew. % reaktive(s) Monomer(e) und etwa 3-30 Gew. % Cumolhydroperoxid, vorzugsweise etwa 30-50 Gew. % thermoplastisches Polyurethan, etwa 40-60 Gew. % reaktive Monomere und etwa 8-15 Gew. % Cumolhydroperoxid, bezogen auf die Gesamtmischung der Bestandteile des reaktiven Klebstofffilms.

In einer bevorzugten, erfindungsgemäßen Ausführungsform umfasst der mindestens eine zweite Klebstofffilm (B) eine Mischung der folgenden Bestandteile: thermoplastisches Polyurethan, insbesondere Desmomelt 530®, Cyclohexylmethacrylat, Tetrahydrofurfurylmethacrylat, Methacrylsäure, Ethylenglykoldimethacrylat und PDHP.

In einer weiteren bevorzugten, erfindungsgemäßen Ausführungsform umfasst der mindestens eine zweite Klebstofffilm (B) eine Mischung der folgenden Bestandteile: thermoplastisches Polyurethan, insbesondere Desmomelt 530®, Methylmethacrylat, Methacrylsäure, Ethylenglykoldimethacrylat und PDHP.

In einer weiteren bevorzugten, erfindungsgemäßen Ausführungsform umfasst der mindestens eine zweite Klebstofffilm (B) eine Mischung der folgenden Bestandteile: thermoplastisches Polyurethan, insbesondere Desmomelt 530®, 2-Phenoxyethylmethacrylat, Ethylenglykoldimethacrylat und PDHP.

In einer weiteren bevorzugten, erfindungsgemäßen Ausführungsform umfasst der mindestens eine zweite Klebstofffilm (B) eine Mischung der folgenden Bestandteile: thermoplastisches Polyurethan, insbesondere Desmomelt 530®, Di-(ethylenglykol)methylethermethacrylat, Ethylenglykoldimethacrylat und PDHP.

Jede dieser bevorzugten, erfindungsgemäßen Ausführungsformen enthält etwa 20-80 Gew. % thermoplastisches Polyurethan, etwa 20-80 Gew. % reaktive(s) Monomer(e) und größer 0 bis etwa 40 Gew. % PDHP, vorzugsweise etwa 30-50 Gew. % thermoplastisches Polyurethan, etwa 40-60 Gew. % reaktive(s) Monomer(e) und etwa 15-25 Gew. % PDHP, bezogen auf die Gesamtmischung der Bestandteile des reaktiven Klebstofffilms.

Wie hierin verwendet, bezieht sich die Gesamtmischung der Bestandteile des reaktiven Klebstofffilms auf die gesamte Menge der eingesetzten polymeren Filmbildner-Matrix (a), der/des reaktiven Monomere/Monomers und oder der/des Reaktiveharze/Reaktivharzes (b), des Reagens (c) sowie weiterer optional vorliegender Komponenten, die als Summe (in Gew.%) erhalten wird.

Der reaktive Klebstofffilm der Erfindung besitzt in der Regel eine Schichtdicke im Bereich von 5 bis 500 µm, bevorzugt etwa 20-200 µm, bevorzugter etwa 30-100 µm, noch bevorzugter etwa 40-60 µm und besonders bevorzugt etwa 50 µm. Zur Herstellung größerer Schichtdicken kann es von Vorteil sein, mehrere Klebstofffilmschichten zusammen zu laminieren.

Zudem ist der erfindungsgemäße, reaktive Klebstofffilm dadurch gekennzeichnet, dass er bevorzugt haftklebrige Eigenschaften besitzt. Als haftklebrige Stoffe sind gemäß Römpp solche viskoelastischen Klebstoffe definiert (Römpp Online 2013, Dokumentkennung RD-08-00162), deren abgebundener, trockener Film bei Raumtemperatur permanent klebrig ist und klebfähig bleibt. Die Haftklebung erfolgt durch leichten Anpressdruck sofort auf fast allen Substraten. Als leichter Anpressdruck ist hier ein Anpressdruck von größer 0 bar, der für eine Dauer von größer 0 Sekunden ausgeübt wird, gemeint.

### Reaktives Klebstofffilm-System

Erfindungsgemäß werden der erste und der zweite reaktive Klebstofffilm, wie oben beschrieben, für ein reaktives Klebstofffilm-System eingesetzt, welches dadurch gekennzeichnet ist, dass der erste reaktive Klebstofffilm (A), neben der Filmbildner-Matrix (a) und mindestens einem reaktiven Monomer oder Reaktivharz (b), einen Initiator, insbesondere Radikalinitiator enthält und der zweite reaktive Klebstofffilm (B), neben der Filmbildner-Matrix (a) und mindestens einem reaktiven Monomer oder Reaktivharz (b), einen Aktivator enthält.

Außerdem wird erfindungsgemäß ein reaktives Klebstofffilm-System bereitgestellt, umfassend zwei oder mehrere reaktive Klebstofffilme, wie oben definiert, dadurch gekennzeichnet, dass ein erster reaktiver Klebstofffilm (A) einen Initiator, insbesondere Radikalinitiator enthält und ein zweiter reaktiver Klebstofffilm (B) einen Aktivator enthält und diese beiden reaktiven Klebstofffilme (A) und (B) jeweils abwechselnd vorliegen.

Der erste und der zweite reaktive Klebstofffilm (A) und (B) vernetzen und härten aus, sobald sie unter mäßigem Druck, insbesondere 0,5 bis 3 bar, bei Temperaturen im Bereich von Raumtemperatur bis 100°C flächig in Kontakt gebracht werden. Der genannte mäßige Druck soll insbesondere von Hand zu erreichen sein. Die Kontaktzeit beträgt erfindungsgemäß, je nach Temperatur, einige Minuten bis einige Stunden. Der Druck kann maschinell oder manuell aufgebracht werden.

Werden die beiden reaktiven Klebstofffilme (A) und (B), wie oben beschrieben, zuvor auf den zu verklebenden Substraten aufgebracht, kommt durch die oben beschriebene Vernetzung eine dauerhafte Verklebung der Substrate zu Stande. Alternativ kann zunächst auch Klebstofffilm (A) auf das erste zu verklebende Substrat aufgebracht und auf Klebstofffilm (A) Klebstofffilm (B) aufgebracht werden. Anschließend wird dann das zweite zu verklebende Substrat auf Klebstofffilm (B) aufgebracht.

Die Klebstofffilme (A) und (B) können bezüglich ihrer Geometrie - zum Beispiel ihrer Schichtdicke - und/oder bezüglich ihrer chemischen Basis - zum Beispiel Filmbildner-Matrix, Monomere - identisch sein, wenn man von den Komponenten Initiator und Aktivator absieht, so dass ein symmetrisches Klebstofffilm-System vorliegt. Die Geometrie der beiden Klebstofffilme (A) und (B) und/oder deren chemische Basis - insbesondere die eingesetzten Monomere - können auch unterschiedlich gewählt werden.

Die Klebstofffilme (A) und (B) weisen sehr bevorzugt jeweils eine Dicke im Bereich bis zu 500 µm auf, wie etwa Filmdicken von 20 µm, 50 µm, 100 µm, 250 µm, 270 µm oder 500 µm. Sehr bevorzugt werden Klebstofffilme mit Dicken im Bereich zwischen 5 und 200 µm eingesetzt. Die Dicken beider Klebstofffilme des Klebstofffilm-Systems können identisch gewählt sein, oder es kommen Klebstofffilme unterschiedlicher Dicke zum Einsatz, vorteilhaft haben im zweiten Fall beide Klebstofffilme unabhängig voneinander jeweils eine Dicke im Bereich bis 500 µm, bevorzugt von 20 µm bis 200 µm. Bei asymmetrischen Filmen kann der Initiator-haltige Film der dickere und der Aktivator-haltige Film der dünnere sein, es ist aber auch möglich, dass der Initiator-haltige Film der dünnere und der Aktivator-haltige Film der dickere Film ist.

Auch die gegebenenfalls vorliegende Additivierung der Klebstofffilme (A) und (B) kann identisch sein, oder sich in Art und/oder Menge der Additive unterscheiden.

Durch unterschiedliche Symmetrien lassen sich die jeweiligen Klebstofffilme hervorragend bezüglich der jeweiligen Substratoberfläche, auf der sie verklebt werden sollen, optimieren.

Weiterhin kann das reaktive Klebstofffilm-System der Erfindung weitere Filme, Schichten, Klebstoffe sowie permanente und oder temporäre Träger umfassen.

Geeignete Trägermaterialien sind einem Fachmann auf dem Gebiet bekannt. Beispielsweise können als permanente Träger Folien (Polyester, PET, PE, PP, BOPP, PVC, Polyimide), Vliese, Schäume, Gewebe und/oder Gewebefolien verwendet werden. Temporäre Träger sollten mit einer Trennschicht versehen sein, wobei die Trennschicht in der Regel aus einem Silikontrennlack oder einem fluorierten Trennlack besteht oder polyolefinischen Charakter (HDPE, LDPE) aufweist.

Der Klebstofffilm (A) oder der Klebstofffilm (B) oder beide Klebstofffilme können ihrerseits zur Erhöhung ihrer Eigenstabilität mit einem oder mehreren - insbesondere durchlässigen - Trägern versehen sein. Hierzu bieten sich ebenfalls Folien und Papiere aber auch Gelege, Gewebe und Gewirke an; sehr vorteilhaft sollten diese Materialien für die Monomere und/oder Initiator bzw. Aktivator durchlässig sein, etwa beispielsweise eine weitmaschige Struktur aufweisen. Die Oberflächen dieser Trägermaterialien können jeweils unabhängig voneinander chemisch und/oder physikalisch so vorbehandelt sein, dass eine besonders gute Verankerung der Matrix mit dem Trägermaterial erreicht werden kann.

Gegebenenfalls kann es notwendig sein, dass die Oberflächen der zu verklebenden Substrate durch ein physikalisches, chemisches und/oder physikalisch-chemisches Verfahren vorbehandelt werden. Hier ist beispielsweise das Aufbringen eines Primers oder einer Haftvermittlerzusammensetzung vorteilhaft.

Insbesondere um Spalte zwischen den Substratoberflächen zu überbrücken oder Unebenheiten in den Substratoberflächen auszugleichen, aber auch zu anderen Anwendungszwecken, kann es gewünscht sein, besonders dicke Klebstofffilm-Systeme einzusetzen. Hierzu können beispielsweise solche Klebstofffilm-Systeme, die aus drei oder mehr Klebstofffilmen bestehen, eingesetzt werden, etwa der Art (A)-(B)-(A), (B)-(A)-(B), (A)-(B)-(A)-(B), (B)-(A)-(B)-(A), wobei diese Schichtabfolgen im Prinzip beliebig fortgesetzt werden können. Statt jeweils identischer Klebstofffilme des Typs (A) bzw. des Typs (B) kann in deren jeweils konkreter Zusammensetzung auch variiert werden, etwa der Art (A)-(B)-(A'), (B)-(A)-(B'), (A)-(B)-(A')-(B'), (B)-(A)-(B')-(A'), wobei auch diese Schichtabfolgen im Prinzip beliebig fortgesetzt werden können. Die Geometrien (Dicken etc.) der einzelnen Schichten (A) und/oder (B) können identisch sein oder unabhängig voneinander gewählt werden. Die einzelnen Schichten werden insbesondere erst zur Verklebung in Kontakt gebracht.

Dicke Klebstofffilm-Systeme können auch derart realisiert werden, dass eine Klebefilm-Komponente auf mindestens einer Seite eines Trägermaterials beliebiger Dicke - beispielsweise eines Schaums - eine Klebstoffschicht des Typs (A) oder des Typs (B) aufweist, die zur Verklebung mit dem zweiten zur Reaktion benötigten Klebefilm in Kontakt gebracht wird. Dieser kann als Einzelschicht vorliegen, ebenfalls Teil eines Schaums oder eines Mehrschiochtsystems sein. Die zweite Seite des Trägermaterials kann auf gleiche Art verklebt werden - also ebenfalls über ein erfindungsgemäßes Zwei- oder Mehrschicht-Klebstofffilm-System, aber im Prinzip auch über eine Selbstklebemasse, einen Flüssigkleber oder auf andere Weise. Auch hier sind symmetrische und asymmetrische Aufbauten realisierbar.

### Substrate

Geeignete Substrate, die zur Verklebung über das erfindungsgemäße, reaktive Klebstofffilm-System geeignet sind, sind Metalle, Glas, Holz, Beton, Stein, Keramik, Textil und/oder Kunststoffe. Die zu verklebenden Substrate können gleich oder verschieden sein.

In einer bevorzugten Ausführungsform wird das erfindungsgemäße, reaktive Klebstofffilm-System zur Verklebung von Metallen, Glas und Kunststoffen eingesetzt. In einer besonders bevorzugten, erfindungsgemäßen Ausführungsform werden Polycarbonate und eloxiertes Aluminium verklebt.

Die zu verklebenden Metallsubstrate können generell aus allen geläufigen Metallen und Metalllegierungen gefertigt werden. Bevorzugt kommen Metalle, wie zum Beispiel Aluminium, Edelstahl, Stahl, Magnesium, Zink, Nickel, Messing, Kupfer, Titan, eisenhaltige Metalle und Legierungen zum Einsatz. Die zu verklebenden Teile können außerdem aus unterschiedlichen Metallen aufgebaut sein.

Geeignete Kunststoffsubstrate sind beispielsweise Acrylnitril-Butadien-Styrol-Copolymere (ABS), Polycarbonate (PC), ABS/PC-Blends, PMMA, Polyamide, Glasfaserverstärkte Polyamide, Polyvinylchlorid, Polyvinylenfluorid, Cellulose Acetat, Cycloolefin-Copolymere, Flüssigkristallpolymere (LCP), Polylactid, Polyetherketone, Polyetherimid, Polyethersulfon, Polymethacrylmethylimid, Polymethylpenten, Polyphenylether, Polyphenylensulfid, Polyphthalamid, Polyurethane, Polyvinylacetat, Styrol Acrylnitril Copolymere, Polyacrylate bzw. Polymethacrylate, Polyoxymethylen, Acrylester-Styrol-Acrylnitril Copolymere, Polyethylen, Polystyrol, Polypropylen und/oder Polyester, wie z.B. Polybutylenterephthalate (PBT) und/oder Polyethylenterephthalat (PET).

Substrate können lackiert, bedruckt, bedampft oder besputtert sein.

Die zu verklebenden Substrate können jede beliebige Form annehmen, die für die Verwendung des resultierenden Verbundkörpers erforderlich ist. In der einfachsten Form sind die Substrate eben. Außerdem können auch dreidimensionale Substrate, die z.B. geneigt sind, mit dem erfindungsgemäßen, reaktiven Klebstofffilm-System verklebt werden. Die zu verklebenden Substrate können auch die verschiedensten Funktionen einnehmen, wie zum Beispiel Gehäuse, Sichtfenster, Versteifungselemente, etc.

### Anwendungsbeispiele

Im folgenden werden nicht beschränkend einige vorteilhafte Anwendungsbeispiele für das erfindungsgemäße Klebstofffilm-System dargestellt.
Die erfindungsgemäßen Klebstofffilm-Systeme bieten sich sehr vorteilhaft für die Verklebung von empfindlichen Substraten an. Dies ist zum Beispiel im Automobil-Bereich und im Elektronik-Bereich der Fall, um nur zwei Gebiete beispielhaft zu erwähnen.

Das erfindungsgemäße Klebstofffilm-System ist somit hervorragend geeignet für eine Vielzahl von Verklebungen im Automobil-Bereich. Ein Beispiel ist der Karosserierohbau. Hier können insbesondere die Verklebungen von Stahl auf Stahl, Stahl auf glasfaserverstärkten Kunststoffen (SMC, "sheet molded compounds"), Stahl auf Organoblech (Faserverbundwerkstoffe), Stahl auf Aluminium (insbesondere Aluminiumleichtbauteilen), Stahl auf Magnesium (insbesondere Magnesiumleichtbauteilen), Stahl auf Polyamid (insbesondere glasfaserverstärktem Polyamid), Stahl auf kohlenstofffaserverstärkten Kunststoffen (CFK), Stahl auf Glas, Stahl auf keramikbeschichtetem Glas hervorragend realisiert werden. Das erfindungsgemäße Klebstofffilm-System eignet sich auch dann hervorragend, wenn die Metalle aus der vorgenannten Aufzählung beschichtet sind, etwa durch kathodische Tauchlackierung oder nach deren vollständiger Lackierung bis zum Decklack, wie dies etwa nach Durchlaufen der Lackstraße während der Karosseriefertigung der Fall sein kann.

Ein Vorteil bei der Verklebung mit dem erfindungsgemäßen Klebstofffilm-System, insbesondere auch für die oben genannten Material-Kombinationen, ist die Möglichkeit zur Erzielung hervorragender Verklebungsfestigkeiten bereits bei niedrigen Verklebungstemperaturen. Bei Einwirkung höherer Temperaturen auf unterschiedliche Materialien können starke Unterscheide in deren Längenausdehnung auftreten, die vermieden werden können, wenn die Klebeverbindung bei niedrigen Raumtemperaturen, insbesondere bei Raumtemperatur (23 °C) aushärtet. So eignen sich die erfindungsgemäßen Klebstofffilm-Systeme besonders für solche Substrate, die mit wenig Druck und/oder niedriger Reaktionstemperatur verklebt werden sollen, wie Materialien mit empfindlichen Oberflächen oder Oberflächenbeschichtungen, zerbrechliche Materialien, temperaturempfindliche Materialien; wie insbesondere Kunststoffe.
Auch in solchen Verklebungsprozessen, in denen aus verfahrenstechnischen Gründen keine hohen Drücke und/oder keine hohen Temperaturen realisierbar sind, lassen sich die erfindungsgemäßen Klebstofffilm-Systeme hervorragend einsetzen. Dies ist ebenfalls der Fall, wenn in dem Prozessablauf hohe Drücke und/oder hohe Temperaturen nicht mehr vorgesehen sind, auch wenn sie technisch umsetzbar wären.

Beispiele sind die Verklebung von Automobil-Rückspiegeln in der Spiegelhalterung oder die Verklebung der Spiegelhalterungen in Fahrzeugen, beispielsweise an der Windschutzscheibe.
Insbesondere für diese Anwendung ist es vorteilhaft, wenn die Verklebung mittels eines Verfahrens durchgeführt wird, bei dem der Verbund bis zur Aushärtung des reaktiven Klebstofffilm-Systems zusätzlich durch weitere Fixierungsmittel, wie beispielweise Selbstklebebänder, vorfixiert wird. Ein solches Verfahren wird weiter unten erfindungsgemäß dargestellt.

Die erfindungsgemäßen Klebstofffilm-Systeme produzieren bei ihrer Aushärtung keine aggressiven Substanzen, wie etwa Säuren, und in der Regel auch keine flüchtigen Anteile. Bei herkömmlichen reaktiv aushärtenden Systemen ist das jedoch häufig der Fall. Daher eignen sich die erfindungsgemäßen Klebstofffilm-Systeme hervorragend auch dann, wenn solche Materialien verklebt werden sollen, die durch aggressive Substanzen beschädigt oder zerstört würden, wie etwa lackierte Oberflächen, beispielsweise von Fahrzeugen, siehe auch oben. Dieser Vorteil wirkt sich sowohl bei der Verklebung auf den Lackoberflächen aus, aber auch dann, wenn die Verklebung nicht direkt auf der Lackoberfläche geschieht, die Substanzen aber dennoch mit dem Lack in Kontakt kommen oder auf ihn einwirken könnten. Die erfindungsgemäßen Klebstofffilm-Systeme eignen sich auch hervorragend für die Verklebung in solchen Anwendungen, bei denen die flüchtigen Bestandteile sich bei dem Einsatz der verklebten Produkte störend auswirken würden, etwa durch schleichende Ausdunstung. Dies kann beispielweise der Fall sein, wenn solche Ausdunstungen bei dem Anwender der Produkte gesundheitliche Probleme hervorrufen würden, oder wo Oberflächenqualitäten durch die Ablagerungen der ausgedunsteten Substanzen verschlechtern, zum Beispiel matt, trüb, undurchsichtig und/oder auch schmierig werden, oder dergleichen.

Auch dort, wo die Verklebung auf beweglichen Teilen erzielt werden soll, bieten die erfindungsgemäßen Klebstofffilm-Systeme aufgrund der hohen erreichbaren Festigkeit Vorteile, wie etwa bei der Verklebung von Komponenten im Automobil-Bereich. Beispiele sind die Verklebung von Dekorelementen auf Fahrzeugen oder die Verklebung von oder auf beweglichen - beispielweise rotierenden - Teilen, die besonders hoher mechanischer Belastung ausgesetzt sind.

Ein Vorteil des erfindungsgemäßen Klebststofffilm-Systems gegenüber strahlungshärtenden Systemen kann sich auch überall dort ergeben, wo die Verklebungsstellen schwer zugänglich sind und/oder komplexe Geometrien aufweisen und/oder nicht für Strahlen zu erreichen sind, etwa wenn eines oder beide der Substrate nichttransparent sind.

### Verfahren zur Herstellung eines reaktiven Klebstofffilms

Die erfindungsgemäßen, reaktiven Klebstofffilme werden durch das nachfolgend beschriebene Verfahren hergestellt:
In einem ersten Schritt werden die Inhaltsstoffe in einem oder mehreren Lösemittel(n) und/oder Wasser gelöst bzw. fein verteilt. Alternativ ist kein Lösemittel und/oder Wasser notwendig, da die Inhaltsstoffe bereits vollständig ineinander löslich sind (ggf. unter Einwirkung von Wärme und/oder Scherung). Geeignete Lösemittel sind im Stand der Technik bekannt, wobei bevorzugt Lösemittel eingesetzt werden, in denen mindestens einer der Inhaltsstoffe eine gute Löslichkeit aufweist. Besonders bevorzugt ist Aceton.

Wie hierin verwendet, umfasst der Begriff Inhaltsstoff die polymere Filmbildner-Matrix, mindestens ein reaktives Monomer oder Reaktivharz, ein Reagens, ausgewählt aus einem Initiator, insbesondere Radikalinitiator oder einem Aktivator, sowie gegebenenfalls weitere Additive und/oder Hilfsstoffe, wie oben definiert.

Anschließend werden die aufgelösten oder fein verteilten Inhaltsstoffe in einem zweiten Schritt vermischt. Zur Herstellung der Mischung werden übliche Rührgeräte eingesetzt. Gegebenenfalls wird die Lösung zudem erwärmt. Ggf. werden die Inhaltsstoffe gleichzeitig aufgelöst bzw. feinverteilt und vermischt.

Daraufhin wird in einem dritten Schritt ein Trennpapier, ein Trägermaterial oder ein Haftklebstoff mit der Mischung der aufgelösten bzw. fein verteilten Inhaltsstoffe nach Schritt 2 beschichtet. Die Beschichtung erfolgt nach den üblichen Techniken, die im Stand der Technik bekannt sind.

Nach der Beschichtung wird das Lösemittel in einem vierten Schritt durch Abdampfen entfernt.

Gegebenenfalls kann der reaktive Klebstofffilm in einem weiteren Schritt zu einer Rolle aufgewickelt werden.

Zur Lagerung werden die erfindungsgemäßen, reaktiven Klebstofffilme mit einem Trennliner oder -papier abgedeckt.

Alternativ werden die erfindungsgemäßen, reaktiven Klebstofffilme lösungsmittelfrei durch Extrusion, Hotmeltdüsenbeschichtung oder Kalandrieren hergestellt.

### Kit zur Bereitstellung eines erfindungsgemäßen 2-Komponentenklebesystems in Filmform

Außerdem wird erfindungsgemäß ein Kit zur Bereitstellung eines reaktiven 2-Komponentenklebesystems in Filmform bereitgestellt. Dieses Kit umfasst mindestens einen ersten reaktiven Klebstofffilm (A), der einen Initiator, insbesondere Radikalinitiator enthält, wie oben beschrieben, und mindestens einen zweiten reaktiven Klebstofffilm (B), der einen Aktivator enthält, wie oben beschrieben.

Typischerweise wird das erfindungsgemäße Kit wie folgt verwendet:
Der mindestens eine erste Klebstofffilm (A) wird auf eine Oberfläche eines zu verklebenden Substrats aufgebracht. Außerdem wird der mindestens eine zweite Klebstofffilm (B) auf eine Oberfläche eines zweiten zu verklebenden Substrats aufgebracht. Klebestofffilm (A) und Klebstofffilm (B) werden in Kontakt gebracht und über Verpresszeiten im Bereich von einigen Minuten bis zu mehreren Stunden, bei Temperaturen von Raumtemperatur bis zu 100°C in Kontakt gelassen, wodurch die Polymerisationsreaktion startet und der Klebstoff aushärtet. Alternativ kann der mindestens eine zweite Klebstofffilm (B) auch auf den ersten Klebstofffilm (A)aufgebracht werden und erst anschließend die Oberfläche eines zweiten zu verklebenden Substrats darauf aufgebracht werden.

Gegebenenfalls kann das oben beschriebene Verfahren wiederholt werden, um so eine Verklebung der Schichten Substrat-(A)-(B)-(A)-(B)-Substrat oder Substrat-(B)-(A)-(B)-Substrat oder Substrat-(A)-(B)-(A)-Substrat, etc. zu erreichen. Dies kann vorteilhaft sein, wenn unterschiedliche ausgeprägte Hafteigenschaften zwischen den zu verklebenden Substraten und den ersten und zweiten Klebstofffilmen (A) und (B) gegeben sind.

### Verfahren zur Verwendung des erfindungsgemäßen Klebstoffffilm-Systems unter Vorfixierung durch weitere Fixierungsmittel

In der Regel besteht die Erwartungshaltung, dass die Endfestigkeit der Verklebung mit dem erfindungsgemäßen reaktiven Klebstofffilm-System dieselben oder zumindest ähnliche Werte wie diejenige der bereits bekannten flüssigen oder pastösen Strukturkleber aufweist. Gleichzeitig ist aber eine leichte Handhabbarkeit des verwendeten Klebesystems gewünscht, verbunden mit einer guten Soforthaftung und guter Eigenstabilität (zurückzuführen auf die Kohäsion der Klebstofffilme, insbesondere der Klebstofffilmmatrix).
Für den Verklebungsprozess ist es wünschenswert, wenn eine hinreichende Fixierung bereits kurz nach dem Fügen der Bauteile innerhalb von wenigen Minuten, insbesondere von unter einer Minute bewirkt werden kann, um die Prozesssicherheit zu optimieren. Reaktive Klebemassensysteme benötigen häufig eine längere Zeit, um eine hinreichende Verbundfestigkeit zu erreichen, damit sichergestellt ist, dass der Verbund ohne zusätzliche Stabilisierungsmaßnahmen nicht wieder auseinanderfällt oder damit die Substrate nicht gegeneinander verschoben werden. Daher sind in herkömmlichen Prozessen häufig aufwendige Halterungsmaßnahmen für den Verbund erforderlich. Beispielsweise in der Automobilherstellung sind lange Zeiten bis zur Erzielung einer festen Verklebung problematisch, da das Fahrzeug in der Montagehalle auf dem Fließband von Station zu Station gefahren wird und zusätzliche Halterungen für die Bauteile stören würden. Auch beim Zusammenfügen von Komponenten, Verbünden und Modulen, wie beispielsweise der Fixierung des Innen-Rückspiegels auf der Innenseite der Frontscheibe, sind hohe Anforderungen vorhanden. Üblicherweise werden die Rückspiegelgehäuse über einen Metallfuß, zum Beispiel aus Stahl, angeflanscht, und der Metallfuß selbst wird auf der Scheibe, also üblicherweise auf Glas, verklebt. Die Verklebung wird in der Praxis häufig über wärmeaktivierbare Klebebänder bewirkt, wobei es erforderlich ist - dass der Metallfuß nach der Applikation mit dem Klebeband zusätzlich durch Klemmen an der Scheibe fixiert wird, um anschließend mit der gesamten Frontscheibe in die Wärmekammer eingebracht zu werden, oder um die Verklebungsstelle lokal auf die erforderliche Temperatur zur Aushärtung des wärmeaktivierbaren Klebesystems zu erhitzen, jeweils bis der Aushärtungsprozess abgeschlossen ist.

Je nach Wahl der Komponenten des erfindungsgemäßen Klebstofffilm-Systems (wie Art und Menge der Monomere, Initiatoren, Aktivatoren) kann auch hier die Dauer bis zur hinreichenden Aushärtung, insbesondere bis zu einem Zustand, der ausreicht, um ein Bauteil selbsttätig zu halten, mehrere Minuten bis zu 2 bis 4 Stunden dauern. Das vorstehend genannte Problem kann sich somit auch bei der Verklebung von Fügeteilen mittels des erfindungsgemäßen Klebstofffilm-Systems ergeben, insbesondere wenn das System oder seinen Bestandteile.- wie die einzelnen Klebstofffilme - keine hinreichende Haftklebrigkeit aufweisen.

Eine Lösung dieses Problems wurde gefunden in einem Verfahren zum Verkleben zweier Fügepartner miteinander, bei dem die Fügepartner mittels einen selbstklebendes Klebesystems miteinander fixiert werden und mittels eines reaktiven Klebstofffilm-System, wie dies im Rahmen der Schrift als erfindungsgemäß beschrieben wird, endverklebt werden.

Erfindungsgemäß vorteilhaft wird bei diesem Verfahren gleichzeitig mit der Fügung des zu verklebenden Verbundes aus den beiden Fügepartnern und den beiden Klebstofffilmen (A) und (B) bzw. dem Mehrschicht-Klebstofffilm-System zwischen den beiden Fügepartnern ein oder mehrere selbstklebende Klebesysteme vorgesehen, insbesondere solche selbstklebenden Klebesysteme, die eine hinreichende Sofortklebefestigkeit aufweisen, um den Klebeverbund zuverlässig zusammenzuhalten. Mit Sofortklebefestigkeit ist vorliegend die Klebefestigkeit gemeint, die innerhalb weniger Minuten, bevorzugt innerhalb einer Minute erzielt werden kann. Insbesondere weisen die selbstklebenden Klebesysteme hohe initiale Adhäsion und gute Kohäsion auf.

Die selbstklebenden Klebesysteme müssen nicht die erforderliche Endklebefestigkeit des Verbundes bewirken, da sie nur für die Verbundfestigkeit bis zur Aushärtung des reaktiven Klebesystems dienen sollen. Die Endfestigkeit der Verklebung wird dann durch das ausgehärtete erfindungsgemäße Klebesystem bewirkt.

Die selbstklebenden Klebesysteme werden bevorzugt in Form von doppelseitig klebenden Selbstklebefilmen (einschichtige oder mehrschichtige Selbstklebebänder, mit einer oder mehreren Trägerschichten oder ohne Trägerschichten) eingesetzt.

Selbstklebende Klebesysteme, auch als Selbstklebemassen oder Haftklebemassen (PSA; englisch: "pressure sensitive adhesives") bezeichnet, sind insbesondere solche polymeren Massen, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - gegebenenfalls durch den Einfluss eines gewissen Druckes - ein zu verklebendes Substrat hinreichend zu benetzen, damit sich zwischen der Masse und dem Substrat für die Haftung hinreichende Wechselwirkungen ausbilden können. Die besonderen Eigenschaften der Selbstklebemassen gehen unter anderem insbesondere auf deren viskoelastischen Eigenschaften zurück.

Selbstklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweisen. Durch geeignete kohäsionssteigernde Maßnahmen, wie beispielsweise Vernetzungreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.
Die einsetzbaren doppelseitigen Selbstklebebänder sind grundsätzlich nicht bezüglich ihrer chemischen Natur beschränkt. Vorteilhaft kommen solche auf Acrylat- oder auf Polyurethanbasis zum Einsatz, gegebenenfalls in geschäumter Form. Diese Materialien weisen regelmäßig eine gute Alterungsbeständigkeit auf. Eingesetzt werden können beispielsweise auch doppelseitige Polyethylen-Polypropylen-Schaumstoffklebebänder mit Acrylatklebemassen, insbesondere dann, wenn die Soforthaftung nicht zu hohe Festigkeiten fordert.

Sehr vorteilhaft kommen zur Fügung der zu verklebenden Teile Kombinationsklebebänder zum Einsatz. Diese weisen eines oder mehrere der erfindungsgemäßen Klebstofffilm-Systeme sowie eines oder mehrere Selbstklebefilme auf. Die erfindungsgemäßen Klebstofffilm-Systeme sowie die Selbstklebefilme können dabei insbesondere als Abschnitte, Zuschnitte, Stanzlinge oder andere flächige Formkörper (im folgenden gemeinsam als Formkörper bezeichnet) auf einem temporären Träger vorliegen, der zur Applikation dient und vor der endgültige Fügung der Fügepartner mittels der Klebesysteme wieder entfernt wird.
Die erfindungsgemäßen reaktiven Klebstofffilm-Formkörper können dabei derart gestaltet sein, dass sie aus einem der Klebstofffilme (A) oder (B) oder aus nur einigen Schichten der oben beschriebenen mehrschichtigen Klebstofffilm-Systeme hergestellt werden. Bei der Applikation werden dann auf die entsprechenden Positionen eines der Fügekörper die entsprechenden Formkörper aufgebracht. Hierbei ist es vorteilhaft, ein weiteres Klebeband anzubieten (im folgenden als korrespondierendes Klebeband bezeichnet), bei dem die entsprechenden zur Reaktion erforderlichen zweiten Klebstofffilme bzw. die ergänzenden Schichten der mehrschichtigen Klebstofffilm-Systeme spiegelbildlich angeordnet sind und dementsprechend auf den zweiten Fügepartner appliziert werden können, so dass sie bei Inkontaktbringen der Fügepartner aufeinander zur Deckung kommen.

Es ist aber auch denkbar, die Kombinationsklebebänder derart zu gestalten, dass die Klebstofffilmsytem-Formkörper derart gestaltet sind, dass die Klebstofffilme (A) und (B) aufeinanderliegend vorliegen - insbesondere deckungsgleich - und bei der Applikation der Formkörper der eine Klebstofffilm auf die Formkörperoberfläche aufgelegt wird und der zweite Klebstofffilm auf dem ersten Klebstofffilm freiliegt. Der Kontakt zum zweiten Fügekörper wird dann bei der Zusammenfügung der beiden Fügekörper erreicht. Ebenso kann bei mehrschichtigen erfindungsgemäßen Klebstofffilm-Systemen bereits das vollständige mehrschichtige System aufgelegt sein.

Es ist aber auch erfindungsgemäß realisierbar, Selbstklebefilm-Formkörper auf einem der reaktiven Klebstofffilme (A) oder (B) vorzulegen, so dass bei oder nach der Zusammenbringung der Fügepartner zumindest eine der Substratoberflächen Kontakt zu den nicht mit Selbstklebefilm-Formkörpern abgedeckten Bereichen des reaktiven Klebstofffilms und zu den Selbstklebefilm-Formkörpern ausbilden kann. Hier kann es vorteilhaft sein, ebenfalls ein korrespondierendes Klebeband mit Formkörpern des zur Reaktion benötigten zweiten Klebstofffilms anzubieten, bei denen die Formkörper des zweiten Klebebandes die Geometrie der nicht abgedeckten Bereiche des ersten Klebstofffilms des ersten Klebebandes aufweisen und spiegelsymmetrisch angeordnet sind.

Die Kombinationsklebebänder und/oder die gegebenenfalls angebotenen korrespondierenden Klebebänder können derart vorkonfektioniert sein, dass die entsprechenden Klebebereiche (erfindungsgemäße Klebefilme bzw. Klebstofffilm-Systeme, Selbstklebefilme, zur Verklebung zur Verfügung stehende Bereiche) bereits der beabsichtigten Position bei der Verklebung entsprechend geometrisch angeordnet sind. Sie können beispielsweise als Kombinations-Stanzteile oder als sogenanntes "Family Sheet", also als Klebeband mit allen notwendigen Einzelstanzteilen, angeboten und eingesetzt werden. Die geometrische Ausgestaltung und Anordnung der reaktiven Klebstofffilm-Bereiche und der selbstklebenden Bereiche ist dabei nicht beschränkt. Die Selbstklebefilm-Formkörper und die Klebstofffilm-Formkörper können dabei sich berührend oder beabstandet angeordnet sein.

Beispiele sind kreisförmige selbstklebende Bereiche, um die ein oder mehrere ringförmige Bereiche reaktiver Klebstofffilme angeordnet sind, oder quadratische selbstklebende Bereiche, um die quadratisch rahmenförmige ein oder mehrere Bereiche reaktiver Klebstofffilme angeordnet sind. Die selbstklebenden Bereiche und die Bereiche reaktiver Klebstofffilme können dabei auf Kontakt oder beabstandet angeordnet sein.

Kombinationsklebebänder können beispielsweise als Klebebandrolle angeboten werden. Insbesondere vorteilhaft ist eine Klebebandrolle, bei der einer der erfindungsgemäßen Klebstofffilme (A) oder (B) als fortlaufendes Band ausgestaltet ist, auf dem in regelmäßigen Abständen jeweils ein Selbstklebeband-Formkörper in definierter Länge vorgesehen ist (beispielsweise alle 1 bis 10 cm).

Die Kombinationsklebebänder und die gegebenenfalls vorliegenden korrespondierenden Klebebänder werden bevorzugt derart gestaltet, dass die Dicke der selbstklebenden Formkörper bzw. die Dicke des Klebebandes in den Bereichen, in denen die freiliegende Klebebandoberfläche aus selbstklebenden Formkörpern gebildet wird, und die Dicke der Gesamtheit des reaktiven Klebstofffilm-Systems in den reaktiv verklebenden Bereichen (also die Summe aller Klebstofffilme des Typs (A) und aller Klebstofffilme des Typs (B) sowie eventuell weitere vorhandener Schichten, wie Träger und dergleichen, unabhängig davon, ob sie über das Kombinationsklebeband selbst oder über das korrespondierende Klebeband an die jeweilige Position der Fügestelle eingebracht werden) im Wesentlichen identisch ist, so dass bei Fügung der Fügepartner mittels der Kombinationsklebebänder eine Kontaktierung sowohl in den Bereichen des reaktiven Klebstofffilm-Systems als auch in den selbstklebenden Bereichen stattfindet.
Lassen die Bedingungen es zu, dass mit Druck gearbeitet wird, zum Beispiel mit Anpressdrucken von mehr als einem Bar, so kann es auch vorteilhaft sein, die Gesamtdicke der selbstklebenden Bereiche geringer auszuführen als die Gesamtdicke des reaktiven Klebstofffilms vor der Verpressung. So können die selbstklebenden Bereiche beispielsweise eine bis zu 10 % geringere Dicke aufweisen (zum Beispiel 5 bis 10 % geringer) als die Gesamtdicke des reaktiven Klebstofffilms. Bei der Verklebung kann der Kontakt in den selbstklebenden Bereichen dann unter Druck bewirkt werden, unter Zusammenpressung des reaktiven Klebstofffilm-Systems. Damit ist die Sofortfixierung bewirkt, und der resultierende Druck auf das reaktive Klebstofffilm-System bleibt auch nach Entfernen der äußeren Druckquelle erhalten und kann zur Unterstützung der Aushärtungsreaktion dienen.

Durch die vorgenannten Vorgehensweisen vereinfacht sich der Applikationsprozess beim Kunden derart, dass das Bauteil sofort durch das Selbstklebeband in Position gehalten wird. Hierdurch hat das erfindungsgemäße reaktive Klebstofffilm-System ausreichend Zeit für die Härtung und zur Sicherstellung der Endfestigkeit.

Dadurch sind zum Beispiel bei der Verklebung der Innenspiegel auf der Frontscheibe im Auto sogar ein Verbau in der Produktionslinie möglich. Zudem kann beim Zulieferer der Verklebungsprozess auf der Scheibe vor dem Einbau im Auto deutlich verkürzt, durch Einsparung der Temperaturhärtung Energie gespart und zudem auch das Risiko, das die Temperaturbelastung die Scheibe schädigt, vermieden werden.

Selbstverständlich ist der in diesem Abschnitt dargestellte Verfahren zur Verwendung des erfindungsgemäßen Klebstofffilm-Systems unter Vorfixierung durch weitere Fixierungsmittel auch für alle anderen Anwendungsgebiete realisierbar.

### Verbundkörper

Zuletzt wird erfindungsgemäß ein Verbundkörper bereitgestellt, der durch das erfindungsgemäße, reaktive Klebstofffilm-System, wie oben definiert, oder durch das erfindungsgemäße Kit, wie oben definiert, verbunden ist.

### Experimenteller Teil

Die nachfolgenden Beispiele dienen zur Verdeutlichung der vorliegenden Erfindung, sollen aber keinesfalls als Einschränkung des Schutzbereichs verstanden werden.

### Beispiel 1

Zunächst wird eine 20%ige acetonische Lösung der Filmbildner-Matrix (PU-Lösung) hergestellt. Dazu werden 120 g Desmomelt 530® und 480 g Aceton in ein Schraubglas eingewogen und das Schraubglas wird anschließend verschlossen. Durch mehrtägiges Rollen des Schraubglases auf einer Rollbank wird das Desmomelt 530® vollständig in Lösung gebracht. Je nach Rollgeschwindigkeit dauert der Vorgang etwa ein bis sieben Tage. Alternativ kann die acetonische Lösung auch durch Rühren des Desmomelt 530®-Granulats in Aceton mit einem handelsüblichen Laborrührer hergestellt werden.

### Herstellung des ersten reaktiven, haftklebrigen Klebstofffilms (A), umfassend einen Radikalinitiator

200,0 g der 20%igen acetonischen Lösung von Desmomelt 530® werden mit 47,0 g 2-Phenoxyethylmethacrylat, 3,0 g Ethylenglykoldimethacrylat und 10,0 g Cumolhydroperoxid mit einem handelsüblichen Laborrührer 10 Minuten gemischt. Die erhaltene homogene Mischung wird mit Hilfe eines handelsüblichen Laborstreichtisches (zum Beispiel von der Firma SMO (Sondermaschinen Oschersleben GmbH)) mit einem Streichmesser auf einer silikonisierten Polyesterfolie (Trennpapier) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 µm dicker Film erhalten wird. Der erhaltene haftklebrige Film (A) wird bis zur Verklebung mit einer zweiten silikonisierten Polyesterfolie abgedeckt und aufbewahrt.

### Herstellung des zweiten reaktiven, haftklebrigen Klebstofffilms (B), umfassend einen Aktivator

200,0 g der 20%igen acetonischen Lösung von Desmomelt 530® werden mit 37,0 g 2-Phenoxyethylmethacrylat, 3,0 g Ethylenglykoldimethacrylat und 20,0 g PDHP mit einem handelsüblichen Laborrührer 10 Minuten gemischt. Die erhaltene homogene Mischung wird mit Hilfe eines handelsüblichen Laborstreichtisches mit einem Streichmesser auf einer silikonisierten Polyesterfolie (Trennpapier) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 µm dicker Film erhalten wird. Der erhaltene haftklebrige Film (B) wird bis zur Verklebung mit einer zweiten silikonisierten Polyesterfolie abgedeckt und aufbewahrt.

Die prozentualen Zusammensetzungen der Filme A und B sowie der vorausgegangenen Lösungen sind in der folgenden Tabelle zusammen mit den beschriebenen Einwaagen aufgeführt:

| | **Beispiel 1, Lösung und Film A** | | | |
|---|---|---|---|---|
| | | Gew.% Feststoff | Einwaage (g) mit Lösemittel | Gew.% mit Lösemittel |
| PU-Lösung | | 40,0 | 200,0 | 76,92 |
| 2-Phenoxyethylmethacrylat | | 47,0 | 47,0 | 18,08 |
| Ethylenglykoldimethacrylat | | 3,0 | 3,0 | 1,15 |
| Cumolhydroperoxid | | 10,0 | 10,0 | 3,85 |
| | Summe | 100,0 | 260,0 | 100,00 |

| | **Beispiel 1, Lösung und Film B** | | | |
|---|---|---|---|---|
| | | Gew.% Feststoff | Einwaage (g) mit Lösemittel | Gew.% mit Lösemittel |
| PU-Lösung | | 40,0 | 200,0 | 76,92 |
| 2-Phenoxyethylmethacrylat | | 37,0 | 37,0 | 14,23 |
| Ethylenglykoldimethacrylat | | 3,0 | 3,0 | 1,15 |
| PDHP | | 20,0 | 20,0 | 7,69 |
| | Summe | 100,0 | 260,0 | 100,00 |

### Beispiel 2

Analog zu Beispiel 1 werden der erste und der zweite reaktive, haftklebrige Klebstofffilm (A) und (B) in diesem Beispiel mit den nachfolgenden Konzentrationen hergestellt:

| | **Beispiel 2, Lösung und Film A** | | | |
|---|---|---|---|---|
| | | Gew.% Feststoff | Einwaage (g) mit Lösemittel | Gew.% mit Lösemittel |
| PU-Lösung | | 40,0 | 200,0 | 76,92 |
| Di(ethylenglykol)methyl-ethermethacrylat | | 47,0 | 47,0 | 18,08 |
| Ethylenglykoldimethacrylat | | 3,0 | 3,0 | 1,15 |
| Cumolhydroperoxid | | 10,0 | 10,0 | 3,85 |
| | Summe | 100,0 | 260,0 | 100,00 |

| | **Beispiel 2, Lösung und Film B** | | | |
|---|---|---|---|---|
| | | Gew.% Feststoff | Einwaage (g) mit Lösemittel | Gew.% mit Lösemittel |
| PU-Lösung | | 40,0 | 200,0 | 76,92 |
| Di(ethylenglykol)methyl-ethermethacrylat | | 37,0 | 37,0 | 14,23 |
| Ethylenglykoldimethacrylat | | 3,0 | 3,0 | 1,15 |
| PDHP | | 20,0 | 20,0 | 7,69 |
| | Summe | 100,0 | 260,0 | 100,00 |

### Beispiel 3

Analog zu Beispiel 1 werden der erste und der zweite reaktive, haftklebrige Klebstofffilm (A) und (B) in diesem Beispiel mit den nachfolgenden Konzentrationen hergestellt:

| | **Beispiel 3, Lösung und Film A** | | | |
|---|---|---|---|---|
| | | Gew.% Feststoff | Einwaage (g) mit Lösemittel | Gew.% mit Lösemittel |
| PU-Lösung | | 43,8 | 219,0 | 79,58 |
| Methylmethacrylat | | 35,4 | 35,4 | 12,86 |
| Methacrylsäure | | 6,8 | 6,8 | 2,47 |
| Ethylenglykoldimethacrylat | | 3,0 | 3,0 | 1,09 |
| Cumolhydroperoxid | | 11,0 | 11,0 | 4,00 |
| | Summe | 100,0 | 275,2 | 100,00 |

| | **Beispiel 3, Lösung und Film B** | | | |
|---|---|---|---|---|
| | | Gew.% Feststoff | Einwaage (g) mit Lösemittel | Gew.% mit Lösemittel |
| PU-Lösung | | 39,6 | 198,0 | 76,63 |
| Methylmethacrylat | | 31,6 | 31,6 | 12,23 |
| Methacrylsäure | | 6,2 | 6,2 | 2,40 |
| Ethylenglykoldimethacrylat | | 2,6 | 2,6 | 1,01 |
| PDHP | | 20,0 | 20,0 | 7,74 |
| | Summe | 100,0 | 258,4 | 100,00 |

### Beispiel 4

Analog zu Beispiel 1 werden der erste und der zweite reaktive, haftklebrige Klebstofffilm (A) und (B) in diesem Beispiel mit den nachfolgenden Konzentrationen hergestellt:

| | **Beispiel 4, Lösung und Film A** | | | |
|---|---|---|---|---|
| | | Gew.% Feststoff | Einwaage (g) mit Lösemittel | Gew.% mit Lösemittel |
| PU-Lösung | | 47,3 | 236,5 | 81,78 |
| Cyclohexyl meth acrylat | | 13,0 | 13,0 | 4,5 |
| Tetrahydrofurfurylmethacrylat | | 13,0 | 13,0 | 4,5 |
| Methacrylsäure | | 6,7 | 6,7 | 2,32 |
| Ethylenglykoldimethacrylat | | 10,0 | 10,0 | 3,45 |
| Cumolhydroperoxid | | 10,0 | 10,0 | 3,45 |
| | Summe | 100,0 | 289,2 | 100,00 |

| | **Beispiel 4, Lösung und Film B** | | | |
|---|---|---|---|---|
| | | Gew.% Feststoff | Einwaage (g) mit Lösemittel | Gew.% mit Lösemittel |
| PU-Lösung | | 42,0 | 210,0 | 78,36 |
| Cyclohexyl meth acrylat | | 11,6 | 11,6 | 4,31 |
| Tetrahydrofurfurylmethacrylat | | 11,6 | 11,6 | 4,31 |
| Methacrylsäure | | 6,0 | 6,0 | 2,24 |
| Ethylenglykoldimethacrylat | | 8,8 | 8,8 | 3,32 |
| PDHP | | 20,0 | 20,0 | 7,46 |
| | Summe | 100,0 | 268,0 | 100,00 |

### Probenvorbereitung für den Push-Out-Test

Aus den zu untersuchenden Klebstofffilmen (A) und (B), die beidseitig jeweils mit einem Trennpapier (auch Trennliner) abgedeckt waren, wurden runde Stanzlinge mit einem Durchmesser von 21 mm ausgestanzt. Die Trennpapiere wurden daraufhin jeweils von einer Seite eines Stanzlings abgezogen und der erste Stanzling (A) passgenau auf eine runde Probenscheibe ("Disc") mit ebenfalls einem Durchmesser von 21 mm aufgelegt. Der Stanzling (A) haftete nun an der "Disc". Derart wurden Probenkörper mit Probenscheiben aus Polycarbonat, Glas und solche mit Probenscheiben aus Stahl hergestellt (siehe Tabelle). Anschließend wurde das noch auf den ersten Stanzlingen (A) verbliebene Trennpapier abgezogen. Der zu untersuchende zweite Klebstofffilm (B) wurde mit der nicht abgedeckten Seite auf den auf der Disc haftenden Stanzling (A) gelegt, so dass der zweite Stanzling (B) auf dem ersten Stanzling (A) haftete.

Das zweite Substrat bildete eine quadratische Lochplatte, die entweder aus Polycarbonat (PC), Glas oder aus Stahl bestand (siehe Tabelle); Seitenlängen jeweils 40 mm, mit einem zentral angeordneten runden Loch (Lochdurchmesser 9 mm) in der quadratischen Platte.

Zur Verklebung wurde das letzte noch auf dem zweiten Stanzling (B) verbliebene Trennpapier abgezogen, so dass der zweite Stanzling (B) offen lag. In einer Versuchsvariante wurde auf den offenen Stanzling B nochmals der vom Trennliner befreite Stanzling A gelegt, so dass die Stanzling-Reihenfolge A-B-A vorlag. Vom Stanzling A wurde nun wieder der verbliebene Trennliner abgezogen, so dass Stanzling A offen lag und eine Verklebung Prüfkörper-A-B-A-Prüfkörper hergestellt werden konnte (siehe Tabelle).

### Verklebung für den Push-Out-Test

Der runde Probenkörper wurde mit der offen liegenden Seite derart auf der Lochplatte positioniert, dass das Zentrum des runden Probenkörpers und das Zentrum des Lochs der Lochplatte übereinander lagen. Anschließend wurde der durch die Haftklebrigkeit der ersten und zweiten Stanzlinge (A) und (B) zusammengehaltene Verbund aus quadratischer Lochplatte, dem zweiten Stanzling (B), dem ersten Stanzling (A) und der Disc oder in einer Versuchsvariante aus quadratischer Lochplatte - Stanzling A - Stanzling B - Stanzling A - Disc so in einen 60°C warmen Trockenschrank gelegt, dass die quadratische Lochplatte auf dem Boden lag. Auf die Disc wurde ein Gewicht von 2 kg gelegt. Der Verbund verblieb unter dem permanenten Druck des Gewichtes 60 Minuten bei 60°C im Trockenschrank. Anschließend wurde das Gewicht entfernt und der Verbund aus dem Ofen genommen. Dabei kam es zu einer Härtungsreaktion innerhalb der Stanzlinge und zu einer verstärkten Haftung zwischen den Stanzlingen sowie zu den Prüfkörpern. Es kam somit zu einer Verklebung mit einer Festigkeit, die über die ursprüngliche Festigkeit durch Haftklebewirkung deutlich hinausging. Anschließend wurde das Gewicht entfernt und der nunmehr gefestigte Verbund aus dem Ofen genommen. Der Verbund wurde anschließend 24 Stunden bei 23°C und 50% relativer Luftfeuchtigkeit gelagert. Sodann erfolgte der Push-Out-Test.

Statt der beschriebenen Härtung bei 60°C erfolgte alternativ auch eine Härtung bei 23°C (Härtungstemperatur) und 50% relativer Feuchtigkeit (siehe Tabelle). Dazu wurde der durch die Haftklebrigkeit der Stanzlinge zusammengehaltene Verbund in einer Versuchsanordnung, wie bei der 60°C-Härtung beschrieben, 24 Stunden (Verpresszeit) mit einem Gewicht von 2 kg zusammengedrückt.

### Push Out-Test

Der Push Out-Test ermöglicht Aussagen über die Verklebungsfestigkeit eines doppelseitig klebenden Klebeprodukts in Richtung der Klebschichtnormalen. Dazu wurde mittels eines in eine Zugprüfmaschine gespannten Dorns durch das Loch in der Lochplatte mit einer konstanten Geschwindigkeit von 10 mm/min senkrecht auf den runden Prüfkörper gedrückt (also parallel zum Normalenvektor auf die Prüfkörper-Ebene; mittig auf die Lochmitte zentriert), bis die Verklebung sich soweit löste, dass ein Druckabfall von 50 % registriert wurde. Der unmittelbar vor dem Druckabfall einwirkende Druck ist der Maximaldruck Pₘₐₓ. Dieser Wert entspricht dem in der Tabelle angegeben Push Out-Wert [N/mm²]. Alle Messungen wurden in einem klimatisierten Raum bei 23°C und 50 % relativer Luftfeuchte durchgeführt.

### Probenvorbereitung für die Bestimmung der Zugscherfestigkeit

Aus den zu untersuchenden ersten und zweiten Filmen (A) und (B), die beidseitig jeweils mit einem Trennpapier abgedeckt waren, wurden rechteckige Stanzlinge mit den Maßen 2,0 cm x 1,0 cm ausgestanzt. Die Trennpapiere wurden daraufhin jeweils von einer Seite eines Stanzlings abgezogen und der erste Stanzling (A) wurde bündig auf das Ende eines Prüfkörpers mit den Maßen 10,0 cm x 2,0 cm x 0,3 cm aufgelegt. Der Stanzling haftete nun auf dem Prüfkörper. Derart wurden Probenkörper mit Prüfkörpern aus Polycarbonat, Glas und solche mit Prüfkörpern aus Stahlhergestellt (siehe Tabelle). Anschließend wurden die noch auf den ersten Stanzlingen (A) verbliebenen Trennpapiere abgezogen. Der zweite zu untersuchende Stanzling (B) wurde mit der nicht abgedeckten Seite bündig auf den auf dem Prüfkörper haftenden ersten Stanzling (A) gelegt, so dass der zweite Stanzling (B) auf dem ersten Stanzling (A) haftete.

Der zweite Prüfkörper hatte die gleichen Maße wie der erste und bestand ebenfalls entweder aus Polycarbonat (PC), Glas oder aus Stahl(siehe Tabelle); Zur Verklebung wurde das letzte noch auf dem zweiten Stanzling (B) verbliebene Trennpapier abgezogen, so dass der zweite Stanzling (B) offen lag. In einer Versuchsvariante wurde auf den offenen zweiten Stanzling (B) nochmals ein vom Trennpapier befreiter erster Stanzling (A) gelegt, so dass die Stanzling-Reihenfolge (A)-(B)-(A) vorlag. Vom ersten Stanzling (A) wurde nun wieder das verbliebene Trennpapier abgezogen, so dass der erste Stanzling (A) offen lag und eine Verklebung Prüfkörper-(A)-(B)-(A)-Prüfkörper hergestellt werden konnte (siehe Tabelle).

### Verklebung für die Bestimmung der Zugscherfestigkeit

Der zweite Prüfkörper wurde mit einem Ende bündig auf den zweiten Stanzling (B) gelegt, so dass wie in DIN EN 1465 beschrieben, ein überlappender, durch die Haftklebrigkeit der beiden Stanzlinge (A) und (B) zusammengehaltener Verbund resultierte. Die Überlappungslänge betrug 1,0 cm. Die Überlappungsfläche betrug 2,0 cm². Anschließend wurde dieser durch die Haftklebrigkeit der Stanzlinge (A) und (B) zusammengehaltene, überlappende Verbund aus erstem Prüfkörper - Stanzling (B) - Stanzling (A) - zweitem Prüfkörper oder in einer Versuchsvariante aus erstem Prüfkörper - Stanzling (A) - Stanzling (B) - Stanzling (A) - zweitem Prüfkörper in einen 60°C (Härtungstemperatur) warmen Trockenschrank gelegt. Auf den zweiten Prüfkörper wurde mittig im Bereich der Überlappung ein Gewicht von 2 kg gelegt. Der Verbund verblieb unter dem permanenten Druck des Gewichtes 60 Minuten bei 60°C im Trockenschrank (Verpresszeit).

Dabei kam es zu einer Härtungsreaktion innerhalb der Stanzlinge und zu einer verstärkten Haftung zwischen den Stanzlingen sowie zu den Prüfkörpern. Es kam somit zu einer Verklebung mit einer Festigkeit, die über die ursprüngliche Festigkeit durch Haftklebewirkung deutlich hinausging. Anschließend wurde das Gewicht entfernt und der nunmehr gefestigte Verbund aus dem Ofen genommen. Der Verbund wurde anschließend 24 Stunden bei 23°C und 50% relativer Luftfeuchtigkeit gelagert. Sodann erfolgte die Bestimmung der Zugscherfestigkeit. Statt der beschriebenen Härtung bei 60°C erfolgte alternativ auch eine Härtung bei 23°C (Härtungstemperatur) und 50% relativer Feuchtigkeit (siehe Tabelle). Dazu wurde der durch die Haftklebrigkeit der Stanzlinge zusammengehaltene Verbund in einer Versuchsanordnung, wie bei der 60°C-Härtung beschrieben, 24 Stunden (Verpresszeit) mit einem Gewicht von 2 kg zusammengedrückt.

### Bestimmung der Zugscherfestigkeit

Die Bestimmung der Zugscherfestigkeit von Überlappungsverklebungen ermöglicht Aussagen über die Scherbelastbarkeit eines doppelseitig klebenden Klebeprodukts. Die Bestimmung erfolgte gemäß DIN EN 1465 mittels einer Zugprüfmaschine. Die Prüfgeschwindigkeit betrug 10 mm/min. Alle Messungen wurden in einem klimatisierten Raum bei 23°C und 50 % relativer Luftfeuchte durchgeführt.

### Ergebnisse

**Push-Out-Test**

| | | | **Push-Out** | | |
|---|---|---|---|---|---|
| | | | [N/mm²] | | |
| | Stanzling-Kombination | Verpresszeit/ Härtungstemperatur | PC/PC | Glas/Glas | Stahl/ Stahl |
| **Beispiel 1** | A-B | 1h / 60°C | 4,8 (K) | 1,0 (MB) | 4,2 (A) |
| | | 24h / 23°C | 3,6 (K) | 0,9 (MB) | 3,5 (A) |
| | A-B-A | 1h / 60°C | 2,8 (K) | 1,1 (MB) | 2,5 (K) |
| | | 24h / 23°C | 2,2 (K) | 0,9 (MB) | 2,3 (K) |
| **Beispiel 2** | A-B | 1h / 60°C | 4,3 (K) | 1,0 (MB) | 4,0 (A) |
| | | 24h / 23°C | 2,0 (K) | 0,9 (MB) | 2,3 (K) |
| | A-B-A | 1h / 60°C | 2,5 (K) | 0,9 (MB) | 2,2 (K) |
| | | 24h / 23°C | 1,6 (K) | 0,8 (MB) | 2,0 (K) |
| **Beispiel 3** | A-B | 1h / 60°C | 2,8 (K) | 0,7 (A) | 2,6 (A) |
| **Beispiel 4** | A-B | 1h / 60°C | 1,7 (K) | 0,6 (A) | 1,6 (K) |

| | | | | | |
|---|---|---|---|---|---|
| A = Adhäsives Versagen zwischen Stanzling und Prüfkörper. K = Kohäsives Versagen innerhalb des Stanzling-Verbundes. MB = Materialbruch des Prüfkörpers. | | | | | |

**Zugscherfestigkeit**

| | | | **Zugscherfestigkeit** | | |
|---|---|---|---|---|---|
| | | | [N/mm²] | | |
| | Stanzling-Kombination | Verpresszeit /Härtungstemperatur | PC/PC | Glas/Glas | Stahl/ Stahl |
| **Beispiel 1** | A-B | 1h / 60°C | 8,8 (K) | 1,4 (MB) | 7,4 (A) |
| | | 24h / 23°C | 6,6 (K) | 1,5 (MB) | 6,3 (A) |
| | A-B-A | 1h / 60°C | 6,2 (K) | 1,5 (MB) | 6,2 (A) |
| | | 24h / 23°C | 4,2 (K) | 1,5 (MB) | 5,6 (K) |
| **Beispiel 2** | A-B | 1h / 60°C | 6,2 (K) | 1,4 (MB) | 7,1 (A) |
| | | 24h / 23°C | 3,7 (K) | 1,5 (MB) | 4,8 (K) |
| | A-B-A | 1h / 60°C | 4,9 (K) | 1,5 (MB) | 4,4 (K) |
| | | 24h / 23°C | 3,2 (K) | 1,5 (MB) | 2,9 (K) |
| **Beispiel 3** | A-B | 1h / 60°C | 4,0 (K) | 0,9 (A) | 4,7 (K) |
| **Beispiel 4** | A-B | 1h / 60°C | 2,8 (K) | 1,0 (A) | 2,6 (K) |

| | | | | | |
|---|---|---|---|---|---|
| A = Adhäsives Versagen zwischen Stanzling und Prüfkörper. K = Kohäsives Versagen innerhalb des Stanzling-Verbundes. MB = Materialbruch des Prüfkörpers. | | | | | |

Diese Ergebnisse verdeutlichen, dass mit den erfindungsgemäßen, reaktiven Klebstofffilmen bzw. dem erfindungsgemäßen reaktiven Klebstofffilm-System bei Raumtemperatur (24 h) bzw. 60°C (1 h) zwei Substrate (Prüfkörper) mit einer Festigkeit verklebt werden konnten, die über die ursprüngliche Festigkeit durch Haftklebewirkung deutlich hinausging. Außerdem weist die resultierende Verklebung eine hohe Zugscherfestigkeit auf, so dass der erhaltene Verbundkörper eine hohe Schockresistenz aufweist.

Insgesamt ermöglicht das erfindungsgemäße Klebesystem in Filmform also eine verbesserte Verklebung bei gleichzeitig verbesserter Anwendbarkeit.

## Patentansprüche

1. Reaktives Klebstofffilm-System, umfassend
(i) mindestens einen ersten reaktiven Klebstofffilm, umfassend (a) eine polymere Filmbildner-Matrix, (b) mindestens ein reaktives Monomer oder Reaktivharz und (c) einen Radikalinitiator,
(ii) mindestens einen zweiten reaktiven Klebstofffilm umfassend (a) eine polymere Filmbildner-Matrix und (d) einen Aktivator
**dadurch gekennzeichnet, dass**
der zweite reaktive Klebstofffilm weiterhin (b) mindestens ein reaktives Monomer oder Reaktivharz umfasst
und dass
die polymere Filmbildner-Matrix (a) beider Klebstofffilme thermoplastisches Polyurethan ist.

2. Reaktives Klebstofffilm-System nach Anspruch 1, **dadurch gekennzeichnet, dass** das reaktive Monomer (b) mindestens einen Vertreter, ausgewählt aus Acrylsäure, Acrylsäureester, Methacrylsäure, Methacrylsäureester, Vinylverbindungen und/oder oligomere oder polymere Verbindungen mit Kohlenstoff-Kohlenstoff-Doppelbindungen, vorzugsweise Methylmethacrylat, Methacrylsäure, Cyclohexylmethacrylat, Tetrahydrofurfurylmethacrylat, 2-Phenoxyethylmethacrylat, Di(ethylenglykol)methylether-methacrylat und/oder Ethylenglykoldimethacrylat, umfasst.

3. Reaktives Klebstofffilm-System nach einem der vorhergehenden Ansprüche, **dadurch gekennzeichnet, dass**
die Klebstofffilme haftklebrige Eigenschaften besitzen.

4. Reaktives Klebstofffilm-System nach einem der vorhergehenden Ansprüche, **dadurch gekennzeichnet, dass**
der Radikalinitiator (c) ein Peroxid, vorzugsweise Dimethylbenzylhydroperoxid, ist.

5. Reaktives Klebstofffilm-System nach einem der vorhergehenden Ansprüche, **dadurch gekennzeichnet, dass**
der Aktivator (d) ein Amin, ein Dihydropyridin-Derivat, ein Übergangsmetallsalz oder ein Übergangsmetallkomplex, vorzugsweise 3,5-Diethyl-1,2-dihydro-1-phenyl-2-propylpyridin, ist.

6. Reaktives Klebstofffilm-System nach einem der vorhergehenden Ansprüche, **dadurch gekennzeichnet, dass**
der erste reaktive Klebstofffilm 20-80 Gew. % polymere Filmbildner-Matrix (a), 20-80 Gew. % mindestens eines reaktiven Monomers (b) und 3-30 Gew. % Radikalinitiator (c), vorzugsweise 30-50 Gew. % polymere Filmbildner-Matrix (a), 40-60 Gew. % mindestens eines reaktiven Monomers (b) und 8-15 Gew. % Radikalinitiator (c) umfasst.

7. Reaktives Klebstofffilm-System nach einem der vorhergehenden Ansprüche, **dadurch gekennzeichnet, dass**
der zweite reaktive Klebstofffilm 20-80 Gew. % polymere Filmbildner-Matrix (a), 20-80 Gew. % mindestens eines reaktiven Monomers (b) und größer 0 bis 40 Gew. % Aktivator (d), vorzugsweise 30-50 Gew. % polymere Filmbildner-Matrix (a), 40-60 Gew. % mindestens eines reaktiven Monomers (b) und 0,5-25 Gew. % Aktivator (d) umfasst.

8. Reaktives Klebstofffilm-System nach einem der vorangehenden Ansprüche, umfassend mehrere reaktive Klebstofffilme, **dadurch gekennzeichnet, dass**
ein erster reaktiver Klebstofffilm einen Radikalinitiator enthält und ein zweiter reaktiver Klebstofffilm einen Aktivator enthält und diese beiden reaktiven Klebstofffilme jeweils abwechselnd vorliegen.

9. Reaktives Klebstofffilm-System nach einem der vorhergehenden Ansprüche, umfassend weitere Filme, Schichten, Klebstoffe, Träger, Trennpapier und/oder Trennliner.

10. Verwendung eines reaktiven Klebstofffilm-Systems nach einem der vorhergehenden Ansprüche zur Verklebung von Materialien aus Metall, Holz, Glas und/oder Kunststoffen.

11. Verfahren zur Herstellung eines reaktiven Klebstofffilm-Systems nach einem der vorhergehenden Ansprüche, wobei die Klebstofffilme mittels eines Verfahrens hergestellt werden, dass die folgenden Schritte umfasst:
1. Auflösen und/oder Feinverteilen der Inhaltsstoffe in einem oder mehreren Lösemittel(n) und/oder Wasser,
2. Mischen der aufgelösten oder feinverteilten Inhaltsstoffe,
3. Beschichten eines Trennliners oder -papiers, eines Trägermaterials oder eines Haftklebstoffs mit der Mischung aufgelöster oder verteilter Inhaltsstoffe nach Schritt 2,
4. Verdunsten des Lösemittels und/oder Wassers und
5. Gegebenenfalls Aufwickeln des reaktiven Klebstofffilms zu einer Rolle,
wobei die Inhaltsstoffe (a) eine polymere Filmbildner-Matrix, (b) mindestens ein reaktives Monomer oder Reaktivharz, (c) ein Reagens, ausgewählt aus einem Radikalinitiator beziehungsweise einem Aktivator, sowie gegebenenfalls weitere Additive und/oder Hilfsstoffe umfassen.

12. Kit zur Bereitstellung eines Zweikomponenten-Klebstofffilm-Systems nach einem der vorhergehenden Ansprüche, umfassend (i) mindestens einen ersten reaktiven Klebstofffilm nach einem der Ansprüche 1 bis 6, der einen Radikalinitiator enthält, und (ii) mindestens einen zweiten reaktiven Klebstofffilm nach einem der Ansprüche 1 bis 5 oder 7, der einen Aktivator enthält.

13. Verbundkörper, der durch das reaktive Klebstofffilm-System nach einem der Ansprüche 1 bis 9 oder durch das Kit nach Anspruch 12 verbunden ist.

14. Verfahren zum Verkleben zweier Fügepartner miteinander, **dadurch gekennzeichnet, dass** die Fügepartner mittels einen selbstklebendes Klebesystems miteinander fixiert werden und mittels eines reaktiven Klebstofffilm-System nach einem der vorangehenden Ansprüche endverklebt werden.

## Claims

1. Reactive adhesive film system comprising
(i) at least one first reactive adhesive film, comprising (a) a polymeric film-former matrix, (b) at least one reactive monomer or reactive resin and (c) a radical initiator,
(ii) at least one second reactive adhesive film, comprising (a) a polymeric film-former matrix and (d) an activator,
**characterized in that**
the second reactive adhesive film further comprises (b) at least one reactive monomer or reactive resin and **in that**
the polymeric film-former matrix (a) of both adhesive films is thermoplastic polyurethane.

2. Reactive adhesive film system according to Claim 1, **characterized in that**
the reactive monomer (b) comprises at least one representative selected from acrylic acid, acrylic acid ester, methacrylic acid, methacrylic acid ester, vinyl compounds and/or oligomeric or polymeric compounds having carbon-carbon double bonds, preferably methyl methacrylate, methacrylic acid, cyclohexyl methacrylate, tetrahydrofurfuryl methacrylate, 2-phenoxyethyl methacrylate, di(ethylene glycol) methyl ether methacrylate and/or ethylene glycol dimethacrylate.

3. Reactive adhesive film system according to either of the preceding claims, **characterized in that** the adhesive films possess pressure sensitive adhesive properties.

4. Reactive adhesive film system according to any of the preceding claims, **characterized in that** the radical initiator (c) is a peroxide, preferably dimethylbenzyl hydroperoxide.

5. Reactive adhesive film system according to any of the preceding claims, **characterized in that** the activator (d) is an amine, a dihydropyridine derivative, a transition metal salt or a transition metal complex, preferably 3,5-diethyl-1,2-dihydro-1-phenyl-2-propylpyridine.

6. Reactive adhesive film system according to any of the preceding claims, **characterized in that** the first reactive adhesive film comprises 20-80% by weight of polymeric film-former matrix (a), 20-80% by weight of at least one reactive monomer (b) and 3-30% by weight of radical initiator (c), preferably 30-50% by weight of polymeric film-former matrix (a), 40-60% by weight of at least one reactive monomer (b) and 8-15% by weight of radical initiator (c).

7. Reactive adhesive film system according to any of the preceding claims, **characterized in that** the second reactive adhesive film comprises 20-80% by weight of polymeric film-former matrix (a), 20-80% by weight of at least one reactive monomer (b) and greater than 0 to 40% by weight of activator (d), preferably 30-50% by weight of polymeric film-former matrix (a), 40-60% by weight of at least one reactive monomer (b) and 0.5-25% by weight of activator (d).

8. Reactive adhesive film system according to any of the preceding claims, comprising a plurality of reactive adhesive films, **characterized in that** a first reactive adhesive film comprises a radical initiator, and a second reactive adhesive film comprises an activator, and these two reactive adhesive films are present each alternately.

9. Reactive adhesive film system according to any of the preceding claims, comprising further films, layers, adhesives, backings, release paper and/or release liners.

10. Use of a reactive adhesive film system according to any of the preceding claims, for bonding materials of metal, wood, glass and/or plastics.

11. Method for producing a reactive adhesive film system according to any of the preceding claims, the adhesive films being produced by means of a method which comprises the following steps:
1. dissolving and/or finely distributing the ingredients in one or more solvent(s) and/or water,
2. mixing the dissolved or finely distributed ingredients,
3. coating a release liner or release paper, a backing material or a pressure sensitive adhesive with the mixture of dissolved or distributed ingredients according to step 2,
4. evaporating the solvent and/or water, and
5. optionally winding the reactive adhesive film into a roll,
wherein the ingredients comprise (a) a polymeric film-former matrix, (b) at least one reactive monomer or reactive resin, (c) a reagent selected from an initiator or an activator, and also, optionally, further additives and/or auxiliaries.

12. Kit for providing a two-component adhesive film system according to any of the preceding claims, comprising (i) at least one first reactive adhesive film according to any of Claims 1 to 6, which comprises a radical initiator, and (ii) at least one second reactive adhesive film according to any of Claims 1 to 5 and 7, which comprises an activator.

13. Composite bonded by means of the reactive adhesive film system according to any of Claims 1 to 9 or by the kit according to Claim 12.

14. Method for bonding two joining partners to one another, **characterized in that**
the joining partners are fixed to one another by means of a self-adhesive bonding system and are ultimately bonded by means of a reactive adhesive film system according to any of the preceding claims.

## Revendications

1. Système de film adhésif réactif, comprenant :
(i) au moins un premier film adhésif réactif, comprenant (a) une matrice filmogène polymère, (b) au moins un monomère réactif ou une résine réactive et (c) un initiateur radicalaire,
(ii) au moins un deuxième film adhésif réactif comprenant (a) une matrice filmogène polymère et (d) un activateur,
**caractérisé en ce que**
le deuxième film adhésif réactif comprend en outre (b) au moins un monomère réactif ou une résine réactive,
et **en ce que**
la matrice filmogène polymère (a) des deux films adhésifs est du polyuréthane thermoplastique.

2. Système de film adhésif réactif selon la revendication 1, **caractérisé en ce que** le monomère réactif (b) comprend au moins un représentant, choisi parmi l'acide acrylique, les esters de l'acide acrylique, l'acide méthacrylique, les esters de l'acide méthacrylique, les composés de vinyle et/ou les composés oligomères ou polymères munis de doubles liaisons carbone-carbone, de préférence le méthacrylate de méthyle, l'acide méthacrylique, le méthacrylate de cyclohexyle, le méthacrylate de tétrahydrofurfuryle, le méthacrylate de 2-phénoxyéthyle, le méthacrylate d'éther méthylique de di(éthylène glycol) et/ou le diméthacrylate d'éthylène glycol.

3. Système de film adhésif réactif selon l'une quelconque des revendications précédentes, **caractérisé en ce que** les films adhésifs possèdent des propriétés d'adhésivité de contact.

4. Système de film adhésif réactif selon l'une quelconque des revendications précédentes, **caractérisé en ce que** l'initiateur radicalaire (c) est un peroxyde, de préférence l'hydroperoxyde de diméthylbenzyle.

5. Système de film adhésif réactif selon l'une quelconque des revendications précédentes, **caractérisé en ce que** l'activateur (d) est une amine, un dérivé de dihydropyridine, un sel de métal de transition ou un complexe de métal de transition, de préférence la 3,5-diéthyl-1,2-dihydro-1-phényl-2-propylpyridine.

6. Système de film adhésif réactif selon l'une quelconque des revendications précédentes, **caractérisé en ce que** le premier film adhésif réactif comprend 20 à 80 % en poids de matrice filmogène polymère (a), 20 à 80 % en poids d'au moins un monomère réactif (b) et 3 à 30 % en poids d'initiateur radicalaire (c), de préférence 30 à 50 % en poids de matrice filmogène polymère (a), 40 à 60 % en poids d'au moins un monomère réactif (b) et 8 à 15 % en poids d'initiateur radicalaire (c).

7. Système de film adhésif réactif selon l'une quelconque des revendications précédentes, **caractérisé en ce que** le deuxième film adhésif réactif comprend 20 à 80 % en poids de matrice filmogène polymère (a), 20 à 80 % en poids d'au moins un monomère réactif (b) et plus de 0 à 40 % en poids d'activateur (d), de préférence 30 à 50 % en poids de matrice filmogène polymère (a), 40 à 60 % en poids d'au moins un monomère réactif (b) et 0,5 à 25 % en poids d'activateur (d).

8. Système de film adhésif réactif selon l'une quelconque des revendications précédentes, comprenant plusieurs films adhésifs réactifs, **caractérisé en ce qu'**un premier film adhésif réactif contient un initiateur radicalaire et un deuxième film adhésif réactif contient un activateur, et ces deux films adhésifs réactifs sont chacun présents de manière alternée.

9. Système de film adhésif réactif selon l'une quelconque des revendications précédentes, comprenant des films supplémentaires, des couches, des adhésifs, des supports, des papiers de séparation et/ou des doublures de séparation.

10. Utilisation d'un système de film adhésif réactif selon l'une quelconque des revendications précédentes pour le collage de matériaux en métal, bois, verre et/ou matières plastiques.

11. Procédé de fabrication d'un système de film adhésif réactif selon l'une quelconque des revendications précédentes, dans lequel les films adhésifs sont fabriqués par un procédé qui comprend les étapes suivantes :
1. la dissolution et/ou répartition fine des constituants dans un ou plusieurs solvants et/ou de l'eau,
2. le mélange des constituants dissous ou finement répartis,
3. le revêtement d'une doublure ou d'un papier de séparation, d'un matériau support ou d'un adhésif de contact avec le mélange de constituants dissous ou répartis selon l'étape 2,
4. l'évaporation du solvant et/ou de l'eau, et
5. éventuellement l'enroulement du film adhésif réactif en un rouleau,
les constituants comprenant (a) une matrice filmogène polymère, (b) au moins un monomère réactif ou une résine réactive, (c) un réactif, choisi parmi un initiateur radicalaire et un activateur, ainsi qu'éventuellement d'autres additifs et/ou adjuvants.

12. Kit pour la préparation d'un système de film adhésif bicomposant selon l'une quelconque des revendications précédentes, comprenant (i) au moins un premier film adhésif réactif selon l'une quelconque des revendications 1 à 6, qui contient un initiateur radicalaire, et (ii) au moins un deuxième film adhésif réactif selon l'une quelconque des revendications 1 à 5 ou 7, qui contient un activateur.

13. Corps composite, qui est relié par le système de film adhésif réactif selon l'une quelconque des revendications 1 à 9 ou par le kit selon la revendication 12.

14. Procédé de collage de deux partenaires de liaison l'un avec l'autre, **caractérisé en ce que** les partenaires de liaison sont fixés l'un avec l'autre au moyen d'un système d'adhésion autoadhésif et sont collés de manière finale au moyen d'un système de film adhésif réactif selon l'une quelconque des revendications précédentes.
